# EUROPEAN PATENT APPLICATION

(11) **EP 4 722 844 A1**
(43) Date of publication of application: **08.04.2026**
(21) Application number: 25205928.2
(22) Date of filing: 01.10.2025
(51) Int. Cl.: G05D 1/617, G05D 1/648, G05D 105/15, G05D 107/20, G05D 109/10

(54) **CONTROL METHOD FOR WORK VEHICLE, WORK VEHICLE CONTROL PROGRAM, WORK VEHICLE CONTROL SYSTEM, AND WORK SYSTEM**

(30) Priority: 03.10.2024 JP 2024174171; 23.06.2025 JP 2025105240
(71) Applicant: Yanmar Holdings Co., Ltd., Osaka-shi, Osaka (JP)
(72) Inventor: TAKAHASHI, Mamoru, Osaka-shi (JP); MIYAKE, Koji, Okayama-shi (JP); ONISHI, Kenta, Okayama-shi (JP); ISHIDA, Hiroyasu, Okayama-shi (JP); KIYOSAWA, Yu, Osaka-shi (JP); KATO, Mikiya, Osaka-shi (JP); MUKAI, Kota, Osaka-shi (JP); ENDO, Taisei, Osaka-shi (JP)
(74) Representative: Sekiguchi, Kazuya

(57) **Abstract**

[Problem] To provide a control method for a work vehicle, a work vehicle control program, a work vehicle control system, and a work system capable of improving work efficiency with respect to a work site.

[Solution] A control method for a work vehicle 10 is a control method for the work vehicle 10 that performs work while self-traveling in a work site F1 along a target route R1. This control method includes generating the target route R1, and designating a travel direction of the work vehicle 10 at an end point P22 of a circulating route r13 when generating the circulating route r13 on which the work vehicle 10 travels to circulate around an outer peripheral region F12 of the work site F1 in the target route R1.

## Description

### TECHNICAL FIELD

The present invention relates to a control method for a work vehicle performing work while self-traveling in a work site, a work vehicle control program, a work vehicle control system, and a work system.

### BACKGROUND ART

As the related art, there is known a work vehicle control system (route generation device) used for a work vehicle that performs work (for example, tilling work) while self-traveling in a work site (field) along a target route (work route) (see, for example, Patent Document 1). The work vehicle control system according to the related art includes a generation unit capable of generating a target route in a work site (travel region). The work site includes an inner region (first region) including a work route and an outer peripheral region (second region) set around the inner region. The inner region can be finished by the work vehicle traveling along a reciprocating work route, and the outer peripheral region can be finished by the work vehicle traveling to circulate.

In the related art described above, in a case where a narrow work route smaller than a predetermined width is generated when a work route is generated in the inner region, a controller can generate a work route having a travel work width across the narrow work route and the outer peripheral region. As a result, even in a case where a work region less than the work width of the work vehicle is generated at the time of generating the work route, uncultivated land is less likely to remain.

### PRIOR ART DOCUMENT

### PATENT DOCUMENT

Patent Document 1: JP-A-2017-167838

### SUMMARY OF INVENTION

### TECHNICAL PROBLEM

In a work site such as a field, for example, a sloped exit is provided at any position of an outer shape of the work site, and it is necessary to align an orientation of a base machine toward the exit when a work vehicle that has traveled around an outer peripheral region exits from the work site. In particular, in order to prevent the work site from being damaged in the work site after the work is completed, it is necessary to pay great attention to the turning in the work site, which leads to a decrease in work efficiency.

An object of the present invention is to provide a control method for a work vehicle, a work vehicle control program, a work vehicle control system, and a work system capable of improving work efficiency with respect to a work site.

### SOLUTION TO PROBLEM

A control method for a work vehicle according to one aspect of the present invention is a control method for a work vehicle that performs work while self-traveling in a work site along a target route, the control method including generating the target route; and designating a travel direction of the work vehicle at an end point of a circulating route when generating the circulating route on which the work vehicle travels to circulate around an outer peripheral region of the work site in the target route.

A work vehicle control program according to one aspect of the present invention is a program for causing one or more processors to execute the control method for a work vehicle.

A work vehicle control system according to one aspect of the present invention is used for a work vehicle that performs work while self-traveling in a work site along a target route. The work vehicle control system includes a generation processing unit that generates the target route. The generation processing unit is configured to be able to designate a travel direction of the work vehicle at an end point of a circulating route when generating the circulating route on which the work vehicle travels to circulate around an outer peripheral region of the work site in the target route.

A work system according to one aspect of the present invention includes the work vehicle control system and a base machine of the work vehicle.

### ADVANTAGEOUS EFFECTS OF INVENTION

According to the present invention, it is possible to provide a control method for a work vehicle, a work vehicle control program, a work vehicle control system, and a work system capable of improving work efficiency with respect to a work site.

### BRIEF DESCRIPTION OF DRAWINGS

Fig. 1 is a schematic side view showing an external appearance of a work vehicle according to a first embodiment;
Fig. 2 is a schematic block diagram of a work system according to the first embodiment;
Fig. 3 is a schematic diagram showing an example of a target route in the work system according to the first embodiment;
Fig. 4 is a schematic plan view showing an operation example of the work vehicle according to the first embodiment;
Fig. 5 is a schematic plan view showing an operation example of the work vehicle according to the first embodiment;
Fig. 6 is a schematic diagram showing an example of a display screen in the work system according to the first embodiment;
Fig. 7 is a schematic diagram showing an example of a display screen in the work system according to the first embodiment;
Fig. 8 is a schematic diagram showing an example of a display screen in the work system according to the first embodiment;
Fig. 9 is a schematic plan view showing an operation example of the work vehicle according to the first embodiment;
Fig. 10 is a schematic diagram showing an example of a display screen in the work system according to the first embodiment;
Fig. 11 is a schematic diagram showing an example of a target route in the work system according to the first embodiment;
Fig. 12 is a schematic diagram showing an example of a target route in the work system according to the first embodiment;
Fig. 13 is a schematic diagram showing an example of a target route in the work system according to the first embodiment;
Fig. 14 is a schematic plan view showing an operation example of the work vehicle according to the first embodiment;
Fig. 15 is a schematic diagram showing an example of a target route in the work system according to the first embodiment;
Fig. 16 is a schematic diagram showing an example of generating a reciprocating route in the work system according to the first embodiment; and
Fig. 17 is a schematic diagram showing an example of generating a reciprocating route in the work system according to the first embodiment.

### DESCRIPTION OF EMBODIMENTS

Hereinafter, embodiments of the present invention will be described with reference to the accompanying drawings. The following embodiments are examples embodying the present invention, and are not intended to limit the technical scope of the present invention.

### (First embodiment)

### [1] Entire configuration

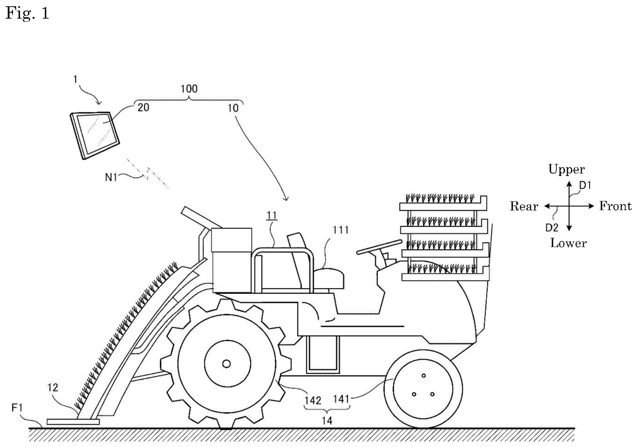

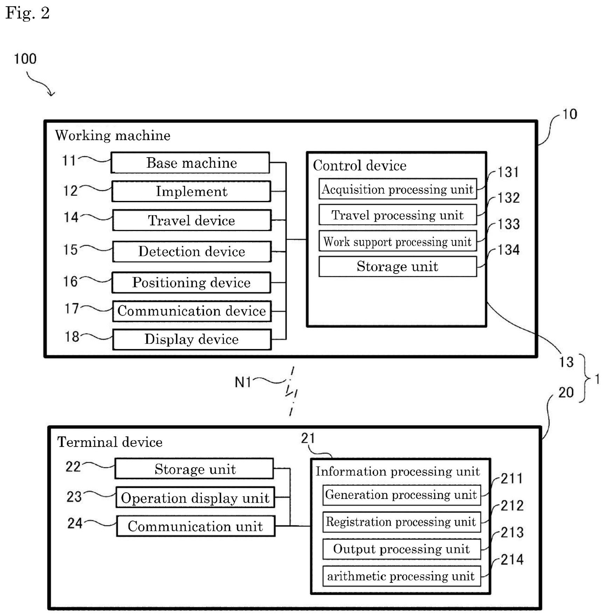

First, the entire configuration of a work system 100 according to the present embodiment will be described with reference to Figs. 1 and 2. A work vehicle control system 1 (hereinafter, also simply referred to as "control system 1") according to the present embodiment configures a work system 100 together with a base machine 11 of a work vehicle 10. An implement 12 is attached to the base machine 11. That is, the work system 100 includes the work vehicle control system 1 and the base machine 11 of the work vehicle 10.

In the present embodiment, the control system 1 includes a control device 13 (see Fig. 2) mounted on the base machine 11 of the work vehicle 10 and a terminal device 20. The work vehicle 10 and the terminal device 20 can communicate with each other. The term "communicable" in the present disclosure indicates that information can be exchanged directly, or indirectly via a communication network (network) N1, a repeater, or the like, in an appropriate communication method for wired or wireless communication (communication using radio waves or light as a medium). The work vehicle 10 and the terminal device 20 can communicate with each other via the communication network N1 such as the Internet, a local area network (LAN), a wide area network (WAN), a public telephone line, a mobile telephone line network, a packet line network, or a wireless LAN. Communication means between the work vehicle 10 and the terminal device 20 is not limited to the above example, and communication is realized by appropriate communication means. In addition, the fact that the work vehicle 10 and the terminal device 20 can communicate with each other is not an essential configuration in the control system 1.

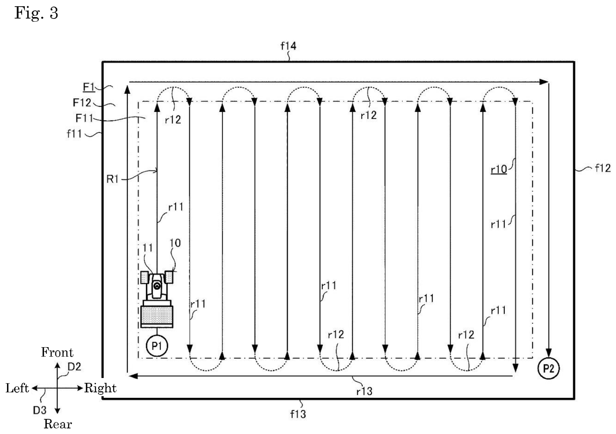

The work vehicle 10 performs some work in a work site F1 with the implement 12 while traveling in the work site F1 (see Fig. 3). The "work" in the present disclosure is work performed by the implement 12 on the work site F1, and includes, for example, various types of agricultural work such as planting (rice planting), sowing, fertilizing, agrochemical spreading, leveling, or harvesting, and various types of construction work. In the present embodiment, as an example, the work performed by the work vehicle 10 is planting (rice planting) work of planting seedlings in a paddy field serving as the work site F1.

The implement 12 performs work in the work site F1 when the base machine 11 of the work vehicle 10 moves in the work site F1. In the present embodiment, as an example, the implement 12 includes a seedling mount on which a seedling mat is placed, a planting arm that takes a seedling from the seedling mat and plants the seedling, and the like so as to perform seedling planting work. Here, the implement 12 is attached to the rear side of the base machine 11 (the side opposite to the advancing direction of the base machine 11). That is, the implement 12 is connected to the rear side of the base machine 11, and performs work while advancing together with the base machine 11 when the base machine 11 advances. In the present embodiment, the implement 12 is included in the constituents of the work vehicle 10, but the implement 12 need not be included in the constituents of the work vehicle 10.

The "work vehicle" in the present disclosure indicates a machine that performs various types of work in the work site F1 such as a field, and is, for example, an agricultural machine such as a rice planter, a tractor, a seeder, a spreader, a sprayer, a transplanter, and a harvester. The work vehicle 10 may be, for example, a construction machine. In the present embodiment, unless otherwise specified, a case where the work vehicle 10 is a rice planter will be described as an example. In the work vehicle 10, the base machine 11 travels in the work site F1 such as a field, so that planting work for receiving seedlings in the work site F1 can be performed.

In the present embodiment, as an example, the work vehicle 10 is an automatic machine on which a person (operator) can get and that can be operated through self-driving (autonomous travel and autonomous work). However, the present invention is not limited thereto, and the work vehicle 10 may be a drone operated through self-driving, or may be operated through an operation (including a remote operation) of a person (operator).

The "work site" in the present disclosure is a region where the work vehicle 10 performs various types of work such as planting (rice planting), sowing, fertilizing, agrochemical spreading, leveling, or harvesting while moving, and includes a paddy field, a field, an orchard, a grass field, and the like. For example, in a case where a paddy field or a field that grows crops (agricultural products) such as rice plants, wheat, soybean, or buckwheat is the work site F1, the crops grown in the work site F1 are agricultural products. In a case where plants are grown in a plant field, the plant field is the work site F1, and in a case where trees to be wood are grown in a forest as in forestry, the forest is the work site F1. In this case, a crop grown in the work site F1 is a plant, a tree, or the like. In the present embodiment, unless otherwise specified, a case where the work vehicle 10 is used for planting a seedling in a field (work site F1) and the work site F1 is a paddy field for growing a rice plant will be described as an example. In addition, the work site F1 is not limited to a field, and for example, in a case where the work vehicle 10 is a construction machine, a site where the construction machine performs work is the work site F1.

In addition, the work vehicle 10 can move through self-travel not only in the work site F1 (here, the field) but also on a road such as a route outside a field outside the work site F1. The work vehicle 10 can self-travel (move) along a target route (including a route outside the field) set in advance in the work site F1 and outside the work site F1 on the basis of position information of a current position of the work vehicle 10 measured by a positioning device 16 (see Fig. 2). The route outside the field is, for example, an inter-field connection road that connects a plurality of work sites F1 (fields). The inter-field connection road is an agricultural road, a forest road, a public road, a private road, an automobile road, or the like, and may be a road dedicated to the work vehicle 10 or a road through which general vehicles (passenger cars and the like) can pass.

### [2] Configuration of work vehicle

Next, a configuration of the work vehicle 10 according to the present embodiment will be described in detail with reference to Figs. 1 and 2.

In the present embodiment, for convenience of description, the vertical direction in a state in which the work vehicle 10 can be used is defined as an up-down direction D1. A front-rear direction D2 and a left-right direction D3 (see Fig. 3) are defined with reference to a direction viewed from a person (operator) riding on (a driving portion 111 of) the base machine 11 of the work vehicle 10. The left side in the left-right direction D3 is a left side when the base machine 11 travels (advances) forward, and the right side in the left-right direction D3 is a right side when the base machine 11 travels (advances) forward. However, these directions are not intended to limit the use direction (a direction at the time of use) of the work vehicle 10.

As shown in Fig. 2, the work vehicle 10 includes a control device 13, a travel device 14, a detection device 15, a positioning device 16, a communication device 17, a display device 18, and the like in addition to the base machine 11 and the implement 12. The control device 13, the travel device 14, the detection device 15, the positioning device 16, the communication device 17, and the display device 18 are all mounted on the base machine 11.

The base machine 11 includes a driving portion 111 (see Fig. 1) on which a person (operator) can get. A steering device, a transmission device, an operating device, and the like are disposed in the driving portion 111. The steering device, the transmission device, the operating device, and the like are operation units operated by an operator or the control device 13. Therefore, the work vehicle 10 can perform both manual driving based on manual operation of the operator and self-driving performed by the control device 13. As described above, the implement 12 is connected to the rear side of the base machine 11.

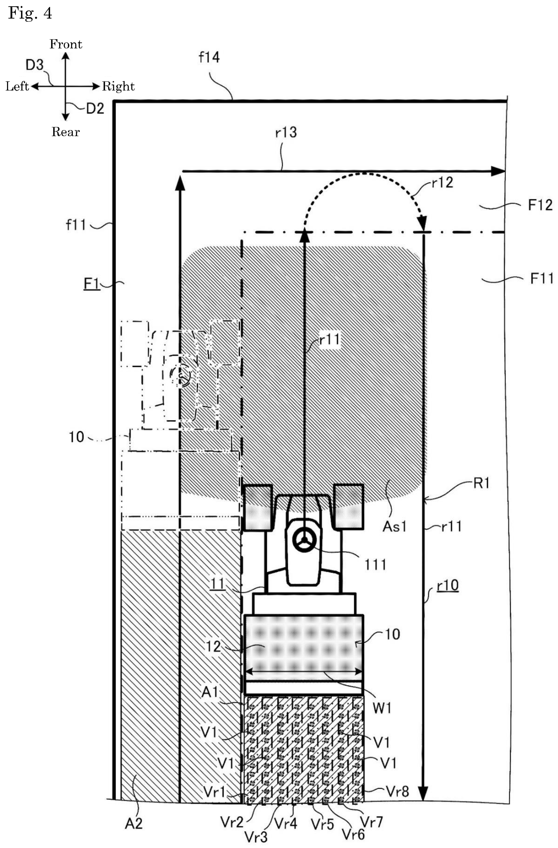

In the present embodiment, the implement 12 is connected to the rear side of the base machine 11, and can perform planting work on the field that is the work site F1 when the base machine 11 moves forward. Here, the implement 12 supports planting of a plurality of rows (for example, six, seven, or eight rows), and has a work width W1 (see Fig. 4) corresponding to the supported number of rows in the width direction (left-right direction D3). That is, for example, in the case of the implement 12 supporting planting of seven rows, it is possible to simultaneously receive seedlings of seven rows in the width direction (left-right direction D3). In the present embodiment, as an example, it is assumed that the work vehicle 10 is an eight-row rice planter including the implement 12 supporting eight rows.

As described above, the work vehicle 10 according to the present embodiment can perform work on a plurality of work lines arranged in a direction (left-right direction D3) intersecting the advancing direction (front-rear direction D2) while traveling in the work site F1. In the present embodiment, as an example, since the work vehicle 10 is an eight-row rice planter, a plurality of work lines Vr1 to Vr8 (see Fig. 4) are respectively eight seedling lines in which seedling lines including a plurality of seedlings V1 (see Fig. 4) arranged in the advancing direction (front-rear direction D2) are arranged at predetermined intervals in the left-right direction D3. That is, the work vehicle 10 can perform the planting work in parallel (simultaneously) on the eight work lines Vr1 to Vr8. Therefore, the work vehicle 10 can simultaneously perform planting on a maximum of eight work lines Vr1 to Vr8 while advancing.

As shown in Fig. 1, the travel device 14 includes front wheels 141, rear wheels 142, a power source (such as an engine and/or a motor), and the like. For example, a pair of left and right front wheels 141 and a pair of left and right rear wheels 142 are provided. The travel device 14 can cause the base machine 11 to travel (move) by driving the rear wheels 142 with power generated by the power source. Here, the front wheels 141 function as turning wheels and enable turning in the left-right direction D3. As a result, the base machine 11 can travel to move in the front-rear direction D2 and the left-right direction D3 in the work site F1.

At least during autonomous traveling, the travel device 14 is operated by the control device 13 operating, for example, the steering device, the transmission device, and the operating device as described above. For example, in the travel device 14, an angle of the front wheels 141 is changed by a hydraulic power steering mechanism or the like by the control device 13 operating the steering device, and the advancing direction of the base machine 11 is changed. In addition, when the control device 13 operates the transmission device, a gear of the transmission is switched to a forward gear, a back gear, or the like, and the travel aspect of the base machine 11 is switched to forward or backward. In addition, the control device 13 operates an accelerator or a brake of the operating device to control a rotation speed of the power source, and brakes the front wheels 141 and the rear wheels 142 by using an electromagnetic brake.

The detection device 15 detects a detection target object (obstacle) in a detection region As1 (see Fig. 4). In the present embodiment, as an example, detection target objects include humans and other animals, moving objects (including other work vehicles) such as vehicles, structures such as walls and columns, plants, steps, or other obstacles. The detection device 15 may include various sensors such as a radar, a sonar sensor, light detection and ranging (LiDAR), a human sensor, or a camera (image sensor). Here, the detection device 15 is preferably a three-dimensional sensor capable of measuring a distance to and an azimuth of a detection target object according to a time of flight (TOF) method of measuring a distance to a distance measurement point on the basis of a reciprocating time until light or sound reaches the distance measurement point and returns, a stereo camera method, or the like. Thus, the detection device 15 can output measurement information including the position of the detection target object in a plan view to the control device 13. In the present embodiment, as an example, it is assumed that the detection device 15 is a radar using millimeter waves (millimeter wave radar) or a sonar sensor using ultrasonic waves (or sound waves).

The positioning device 16 obtains the current position (latitude, longitude, altitude, and the like) of the base machine 11. Specifically, the positioning device 16 calculates the current position (latitude and longitude) of the base machine 11 by using a satellite positioning system such as a global navigation satellite system (GNSS). That is, the positioning device 16 includes a positioning antenna that receives a positioning signal from a satellite, and calculates the current position on the basis of the positioning signal. The positioning device 16 includes an inertial sensor, and can also detect an attitude such as the current azimuth of the base machine 11.

In addition, the positioning device 16 may detect the current position with relatively high accuracy, such as real time kinematic (RTK) positioning of calculating the current position of the work vehicle 10 by using correction information corresponding to a base station (reference station) close to the work vehicle 10. The current position of the base machine 11 may be the same position as the positioning position (the position of the positioning antenna), or may be a position shifted from the positioning position, such as the center position of the base machine 11 in a plan view. As the positioning device 16, for example, a mobile phone terminal, a smartphone, or a tablet terminal may be substituted.

The communication device 17 is a communication interface for connecting the work vehicle 10 (the control device 13, the positioning device 16, and the like) to an external device in a wired or wireless manner and executing data communication with the external device according to a predetermined communication protocol. In the present embodiment, the communication device 17 can communicate with at least the terminal device 20 which is an external device via the communication network N1. The communication device 17 can be connected to the communication network N1 at least wirelessly, and can communicate with the terminal device 20 at any time even though the work vehicle 10 moves (travels) in the work site F1. As the communication device 17, for example, a mobile phone terminal, a smartphone, or a tablet terminal may be substituted.

The display device 18 is a user interface for presenting information to a user (operator), such as a liquid crystal display or an organic EL display that displays various types of information. The display device 18 is disposed in the driving portion 111, for example, and presents various types of information to the operator by displaying a screen including the various types of information. The "screen" in the present disclosure indicates a video (image) displayed on the display device 18 or the like, and includes a picture, a figure, a photograph, a text, a moving image, and the like. The screen displayed on the display device 18 includes not only a still image but also a video (moving image) that changes from moment to moment. The display device 18 has a function of outputting sound (including voice) to the user (operator) and a function of receiving an operation of the user (operator).

The control device 13 mainly includes a computer system including one or more processors such as a central processing unit (CPU) and one or more memories such as a read only memory (ROM) and a random access memory (RAM), and executes various types of processing (information processing). In the present embodiment, since the control device 13 mainly includes the computer system having one or more processors, the control device 13 is implemented by the one or more processors executing a work vehicle control program. In the present embodiment, the control device 13 is an integrated controller that controls the entire work vehicle 10, and includes, for example, an electronic control unit (ECU). However, the control device 13 may be provided separately from an integrated controller.

The control device 13 is configured in such a manner as to be communicable with a device provided in each part of the base machine 11. That is, the implement 12, the travel device 14, the detection device 15, the positioning device 16, the communication device 17, the display device 18, and the like are electrically connected to the control device 13. As a result, the control device 13 can control the implement 12, the travel device 14, the display device 18, and the like, and acquire detection results from the detection device 15 and the positioning device 16. Here, the control device 13 may directly exchange various types of information (data) with each device or indirectly exchange various types of information (data) via a repeater or the like.

In the present embodiment, as shown in Fig. 2, the control device 13 includes an acquisition processing unit 131, a travel processing unit 132, a work support processing unit 133, and a storage unit 134.

The acquisition processing unit 131 executes an acquisition process of acquiring work site information regarding the work site F1. Here, the work site information includes outline information based on an outer shape (outline) of the work site F1. That is, the acquisition processing unit 131 acquires outline information based on the outline of the work site F1.

The travel processing unit 132 executes a travel process of controlling the travel device 14. As an example, the travel processing unit 132 controls the travel device 14 on the basis of the current position of the work vehicle 10 calculated by the positioning device 16 and a preset target route, which causes the work vehicle 10 to self-travel. The travel processing unit 132 controls the implement 12 on the basis of the current position of the work vehicle 10 calculated by the positioning device 16 and a preset target route, which causes the work vehicle 10 to perform work (planting work in the present embodiment) at an appropriate position on the target route.

Specifically, when acquiring a travel start instruction from the terminal device 20, the travel processing unit 132 starts self-travel of the work vehicle 10. For example, when the operator operates a start button on the operation screen of the terminal device 20, the terminal device 20 outputs a travel start instruction to the work vehicle 10. As a result, for example, the work vehicle 10 starts self-travel along a target route R1 (see Fig. 3) in the work site F1, and performs work (planting work in the present embodiment) with the implement 12.

The target route R1 on which the work vehicle 10 self-travels is generated in, for example, the terminal device 20. That is, the work vehicle 10 acquires route data corresponding to the target route R1 from the terminal device 20, and self-travels along the target route R1.

When acquiring a travel stop instruction from the terminal device 20, the travel processing unit 132 stops the self-travel of the work vehicle 10. For example, when the operator operates a stop button on the operation screen of the terminal device 20, the terminal device 20 outputs a travel stop instruction to the work vehicle 10.

The term "self-travel" in the present disclosure includes "autonomous travel" in which the work vehicle 10 autonomously travels without an operation of an operator and "semi-self-travel" in which only steering is automated, such as straight assist.

The "autonomous travel" is, for example, a travel aspect in which the control of a vehicle speed and the like is automatically performed in addition to the automatic steering of the turning wheels (front wheels 141) so that the work vehicle 10 travels along the target route R1. The "straight assist" is, for example, a travel aspect in which only the automatic steering of the turning wheels (front wheels 141) is performed such that the work vehicle 10 travels along a straight route parallel to a straight line (reference line) serving as a reference, and a vehicle speed and the like are controlled through an operation of an operator.

As another example, the work vehicle 10 may travel through manual steering of an operator. For example, the operator gets on the work vehicle 10 and causes the work vehicle 10 to travel through manual steering while checking the target route R1.

The work support processing unit 133 executes a work support process of supporting work (planting work in the present embodiment) of the implement 12. The work support process includes, for example, a process of supporting the operation of the implement 12 by the operator by performing presentation (display, sound output, or the like) related to the operation of the implement 12 on a user interface such as the display device 18, and a process of directly controlling the implement 12. In the present embodiment, basically, the work support processing unit 133 executes the former process (that is, a process of supporting the operation of the implement 12 by the operator) as the work support process.

Here, the work support process of the work support processing unit 133 includes a process of setting a row stop position where the row stop control for the implement 12 is performed.

The "row stop control" in the present disclosure is control in which work is not performed on some of the plurality of (eight in the present embodiment) work lines Vr1 to Vr8 and is performed on only the remaining work lines Vr1 to Vr8. As an example, the implement 12 includes a work piece (planting claw or the like) that performs work for each of the work lines Vr1 to Vr8, and a row clutch provided on a power supply path to the work piece, and when the row clutch of any of the work lines Vr1 to Vr8 is disconnected, the work on the work lines Vr1 to Vr8 is stopped. Therefore, for example, the operator operates a row stop lever to control a row clutch of any of the work lines Vr1 to Vr8, so that the row stop control in which work is not performed on any of the work lines Vr1 to Vr8 can be performed.

The "row stop position" in the present disclosure is a position at which such row stop control is performed in the work site F1. That is, in a case where the work vehicle 10 traveling in the work site F1 is located at the row stop position, the row stop control is performed.

The storage unit 134 is a nonvolatile memory or the like that stores various types of data such as a work vehicle control program and target route information regarding the target route R1. That is, the travel processing unit 132 can cause the travel device 14 to self-travel along the target route R1 on the basis of the target route information stored in the storage unit 134.

In a case where the detection device 15 detects an obstacle as a detection target object at least during self-traveling of the work vehicle 10, the control device 13 outputs an alarm (including notification by sound and/or light), and executes an obstacle avoidance process (including detour, deceleration, stop, and the like) by controlling the travel device 14. The control device 13 may output the position information of the obstacle, the execution history of the avoidance process, and the like to the terminal device 20 such that the position information of the obstacle, the execution history of the avoidance process, and the like are displayed on the terminal device 20.

The work vehicle 10 further includes a battery, a fuel tank, various sensors, and the like in addition to the above-described configuration. The battery supplies power for operation to each unit of the work vehicle 10 such as the control device 13, for example. In particular, electronic devices such as the control device 13, the detection device 15, the positioning device 16, the communication device 17, and the display device 18 are operable by being operated by the supply of power from the battery even while the power source (engine) of the travel device 14 is stopped.

### [3] Configuration of terminal device

Next, a configuration of the terminal device 20 according to the present embodiment will be described in detail with reference to Figs. 1 and 2.

In the present embodiment, the terminal device 20 can communicate with the work vehicle 10 as described above, and configures the control system 1 together with the control device 13 of the work vehicle 10. That is, the constituents of the control system 1 are provided to be distributed to at least the work vehicle 10 and the terminal device 20. However, the present invention is not limited to this configuration, and for example, the function of the control device 13 may be provided in the terminal device 20. In this case, the constituents of the control system 1 are realized only by the terminal device 20. Conversely, for example, the function of the terminal device 20 may be provided in the control device 13, and in this case, the constituents of the control system 1 are implemented only by the control device 13.

In the present embodiment, as an example, the terminal device 20 includes a general-purpose terminal such as a tablet terminal, a smartphone, or a laptop computer. As shown in Fig. 2, the terminal device 20 includes an information processing unit 21, a storage unit 22, an operation display unit 23, and a communication unit 24. The terminal device 20 further includes a sound output unit that outputs sound (including voice) to a user (operator), a battery, and the like.

The information processing unit 21 mainly includes a computer system including one or more processors such as a CPU and one or more memories such as a ROM and a RAM, and executes various types of processing (information processing). In the present embodiment, since the information processing unit 21 mainly includes a computer system including one or more processors, the information processing unit 21 is implemented by the one or more processors executing a work vehicle control program. That is, the one or more processors of the control device 13 included in the control system 1 and the one or more processors of the information processing unit 21 execute the work vehicle control program, so that the control device 13 and the terminal device 20 cooperate to implement the control system 1.

The information processing unit 21 is configured to be able to communicate with each of the units (the storage unit 22, the operation display unit 23, and the communication unit 24) of the terminal device 20. That is, the storage unit 22, the operation display unit 23, the communication unit 24, and the like are electrically connected to the information processing unit 21. As a result, the information processing unit 21 can read/write information from/to the storage unit 22, control the display of the operation display unit 23, and acquire an operation input to the operation display unit 23. Here, the information processing unit 21 may exchange various types of information (data) directly with each unit or indirectly via a repeater or the like.

Such a terminal device 20 is a user interface for receiving an operation input of a user (operator) and outputting various types of information to the user. For example, the terminal device 20 outputs an electric signal corresponding to a user's operation on the operation display unit 23 to receive various operations of the user. The terminal device 20 outputs various types of information to the user by displaying various screens on the operation display unit 23.

The storage unit 22 is a nonvolatile memory or the like that stores various types of data such as the work vehicle control program and target route information regarding the target route R1. The storage unit 22 can store various types of data such as implement information, work vehicle information, field information, and work information. The implement information is information regarding the implement 12 attached to the base machine 11, and includes, for example, information such as a type, identification information, a model name, a model, and a size (dimension) of the implement 12. The work vehicle information is information regarding the base machine 11 (vehicle body) of the work vehicle 10, and includes, for example, information such as a type (for example, a half-crawler type or a wheel type), identification information, a model name, a model, and a size (dimension) of the base machine 11. The field information is information regarding the field as the work site F 1, and includes information such as identification information, and a field name, a position, a shape, a size, a work start position (travel start position) at which work is started, a work end position (travel end position) at which work is ended, and a work direction of the field. The work information is information regarding work performed by the work vehicle 10, and includes, for example, information such as a type of work and how to specifically perform the work. The work information may also include the presence or absence of cooperative work by the work vehicle 10, a width of a headland, a width of a non-cultivated land, and the like.

These pieces of information (the target route information, the implement information, the work vehicle information, the field information, the work information, and the like) stored in the storage unit 22 are set (registered) through operation input of the user (operator) on the operation display unit 23 or by being acquired from the work vehicle 10. For example, the type of the implement 12 in the implement information may be designated by the user operating the operation display unit 23, or the type of the implement 12 attached to the base machine 11 may be automatically determined by the work vehicle 10 and transmitted to the terminal device 20. The terminal device 20 may acquire these pieces of information from an external device (for example, a server, an external storage medium, or another terminal device) other than the work vehicle 10.

The operation display unit 23 is a user interface including a display unit such as a liquid crystal display or an organic EL display that displays various types of information, and an operation unit such as a touch panel, a mouse, a keyboard, a mechanical switch, or an encoder that receives an operation. As an example, the operator can perform an operation of setting (registering) various types of information by operating the operation unit of the operation display unit 23 on an operation screen displayed on the display unit of the operation display unit 23. For example, the operator can set self-travel information (including target route information) regarding self-travel of the work vehicle 10.

In addition, the operation display unit 23 displays a work progress status in the work site F1 and an operation status of the work vehicle 10 including the target route R1 of the work vehicle 10, an (actual) movement trajectory, the current position, a movement speed, and the like, which enables the operator to remotely monitor the work vehicle 10 during self-driving. Here, the operation status of the work vehicle 10 includes a detection result of a detection target object in the detection device 15, and the like. The operation display unit 23 can receive a travel start instruction, a travel stop instruction, or the like for the work vehicle 10 from the operator. The terminal device 20 can remotely control the work vehicle 10 by transmitting the travel start instruction, the travel stop instruction, or the like to the work vehicle 10. Therefore, the operator can remotely operate the work vehicle 10.

The communication unit 24 is a communication interface for connecting the terminal device 20 to the work vehicle 10 in a wired or wireless manner and executing data communication with the work vehicle 10 according to a predetermined communication protocol. In the present embodiment, the communication unit 24 can communicate with at least (the communication device 17 of) the work vehicle 10 via the communication network N1. Since the communication unit 24 is connectable to the communication network N1 at least wirelessly, it is possible to communicate with the work vehicle 10 at any time even at a place sufficiently away from the work vehicle 10.

Incidentally, in the present embodiment, as shown in Fig. 2, the information processing unit 21 includes a generation processing unit 211, a registration processing unit 212, an output processing unit 213, and an arithmetic processing unit 214. In the present embodiment, as an example, since the information processing unit 21 mainly includes a computer system including one or more processors, the plurality of functional units (the generation processing unit 211 and the like) are realized by the one or more processors executing the work vehicle control program. The plurality of functional units included in the information processing unit 21 may be provided to be distributed to a plurality of housings, or may be provided in one housing.

The generation processing unit 211 executes a route generation process of generating a route (target route R1) on which the work vehicle 10 travels (self-travels) in the work site F1. Here, the generation processing unit 211 generates the target route R1 on the basis of generation data including the implement information, the work vehicle information, the field information, the work information, and the like stored in the storage unit 22. That is, the target route R1 is generated on the basis of, for example, the implement information, the work vehicle information, the field information, the work information, and the like set (registered) through operation input or the like of the user (operator) on the operation display unit 23.

Specifically, the generation processing unit 211 generates the target route R1 in the work site F1 on the basis of a travel start position P1 (see Fig. 3) and a travel end position P2 (see Fig. 3) included in the field information. For example, the generation processing unit 211 generates the target route R1 on which the base machine 11 of the work vehicle 10 moves from the travel start position P 1 to the travel end position P2 in the work site F1 on the basis of the generation data.

In the present embodiment, the field information included in the generation data includes outline information based on the outline of the work site F1. The field information includes information regarding the area of the work site F1, such as the length of each side of the outline. Therefore, the generation processing unit 211 can generate a route (target route R1) on which the work vehicle 10 travels inside the work site F1 surrounded by the outline.

The registration processing unit 212 executes a registration process of registering the implement information, the work vehicle information, the field information, the work information, and the like. That is, the implement information, the work vehicle information, the field information, the work information, and the like used for generating the target route R1 are registered (set) by the registration processing unit 212 through, for example, operation input of the user (operator) on the operation display unit 23.

The output processing unit 213 executes, for example, an output process of outputting route data of the target route R1 to the work vehicle 10. That is, the route data regarding the target route R1 generated by the generation processing unit 211 is output from the output processing unit 213 to the communication unit 24, for example, and is transmitted from the communication unit 24 to the work vehicle 10.

For example, when starting work, the operator selects a field (work site F1), selects work, checks the target route R1, and the like, and gives a work start instruction. When the operator gives a work start instruction, the output processing unit 213 transmits (outputs) the route data of the target route R1 generated by the generation processing unit 211 to the work vehicle 10. Upon receiving the route data generated by the terminal device 20, the work vehicle 10 stores the route data in the storage unit 134. The work vehicle 10 performs self-driving (autonomous travel and autonomous work) based on the current position of the work vehicle 10 calculated by the positioning device 16 and the target route R1 specified by the route data.

The output processing unit 213 can also output the generated target route R1 to the operation display unit 23 such that the target route R1 is displayed on the operation display unit 23. An aspect of the output of the output processing unit 213 is not limited to the transmission to or display on the work vehicle 10 as described above, and may be, for example, transmission to another device (a user terminal or the like), printing (print-out), writing to a non-transitory recording medium, or sound output.

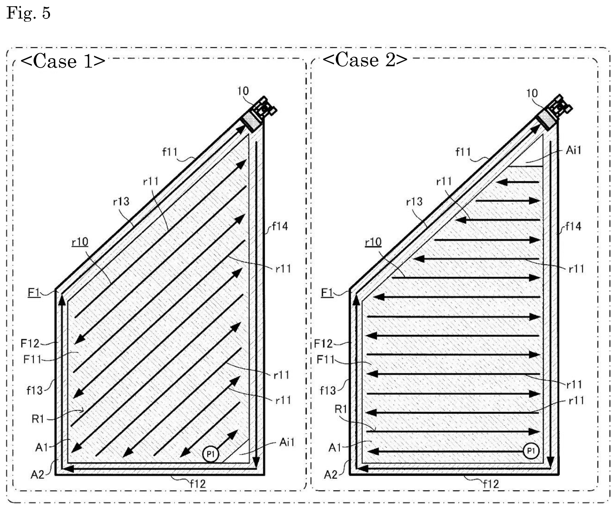

The arithmetic processing unit 214 executes arithmetic processing for obtaining presentation information regarding an unworkable region Ai1 (see Fig. 5). The unworkable region Ai1 is a region where work during self-traveling of the work vehicle 10 is not performed in the work site F1. That is, for example, if there is a region smaller than the work width W1 of the work vehicle 10 in the work site F1, there is a case where the work during the self-traveling of the work vehicle 10 is not performed (or cannot be performed) for the reason that the work vehicle 10 cannot enter the region, and such a region is the unworkable region Ai1.

The "unworkable region" in the present disclosure is a region remaining in an unworked state (that is, in a state in which work has not been performed) after completion of work through self-travel of the work vehicle 10, and is not necessarily limited to a region where work itself of the work vehicle 10 is impossible. For example, the unworkable region Ai1 may be a region where work can be performed through manual driving in which the operator drives the work vehicle 10.

In the present embodiment, the output processing unit 213 further has a function of outputting presentation information obtained through arithmetic processing in the arithmetic processing unit 214. That is, the presentation information regarding the unworkable region Ai1 is obtained by the arithmetic processing unit 214 and output by the output processing unit 213. An aspect of outputting the presentation information by the output processing unit 213 is, for example, display on the display unit (operation display unit 23). That is, when the presentation information is displayed on the operation display unit 23, the unworkable region Ai1 can be visually recognized on a screen displayed on the operation display unit 23. An aspect of outputting the presentation information by the output processing unit 213 is not limited to the display on the operation display unit 23 as described above, and may be, for example, transmission to the work vehicle 10 (display on the display device 18 of the work vehicle 10), transmission to another device (user terminal or the like), printing (print-out), writing to a non-transitory recording medium, or sound output.

The terminal device 20 may be able to access a website (agricultural support site) of an agricultural support service provided by a server via the communication network N1. In this case, the terminal device 20 can function as an operation terminal of the server by the information processing unit 21 executing a browser program. The server includes the above-described respective processing units and executes the respective processes.

### [4] Control method for work vehicle

Hereinafter, with reference to Figs. 3 to 15, an example of a control method for the work vehicle 10 (hereinafter, simply referred to as a "control method") mainly executed by the control system 1 (the control device 13 and the terminal device 20) will be described.

Since the control method according to the present embodiment is executed by the control system 1 mainly including a computer system, in other words, the control method is embodied by a work vehicle control program (hereinafter, simply referred to as a "control program"). In other words, the control program according to the embodiment is a computer program for causing one or more processors to execute each process related to the control method.

Here, in a case where a specific start operation set in advance for executing the control program is performed, the control system 1 executes the following various processes related to the control method. The start operation is, for example, a startup operation of an application program (work vehicle control program) in the terminal device 20. On the other hand, in a case where a predetermined specific end operation is performed, the control system 1 ends the following various processes related to the control method. The end operation is, for example, an end operation of an application program (work vehicle control program) in the terminal device 20.

In the following description, as shown in Fig. 3, it is assumed that the work site F1 is a quadrangular field in a plan view, and of the outline (outer peripheral edge) of the work site F1, one short side is a "first outline f11", the other short side is a "second outline f12", one long side is a "third outline f13", and the other long side is a "fourth outline f14". In the work site F1, the travel start position P1 is disposed near the corner between the first outline f11 and the third outline f13, and the travel end position P2 is disposed near the corner between the second outline f12 and the third outline f13.

### Basic operation

First, a basic operation when the control system 1 according to the present embodiment causes the work vehicle 10 to perform work while causing the work vehicle 10 to self-travel along the target route R1 in the work site F1 including a certain field will be described with reference to Figs. 3 and 4. That is, the control method according to the present embodiment is a control method for the work vehicle 10 that performs work while self-traveling along the target route R1 in the work site F1. Fig. 4 is a schematic enlarged view of the vicinity of a corner between the first outline f11 and the fourth outline f14 in Fig. 3.

In the examples of Figs. 3 and 4, the target route R1 includes a work route r11, a non-work route r12, and a circulating route r13. Here, the work route r11 and the circulating route r13 are routes on which the work vehicle 10 travels (moves) while performing work with the implement 12. The non-work route r12 connects the plurality of work routes r11 and is a route for the work vehicle 10 to perform turning travel for changing the advancing direction, and is a route on which the work vehicle 10 travels (moves) without performing work with the implement 12.

In the drawings such as Fig. 3 showing the target route R1, routes on which the work vehicle 10 performs work (the work route r11 and the circulating route r13) are indicated by solid lines, and routes on which the work vehicle 10 does not perform work (non-work route r12) are indicated by dotted lines. In the drawings such as Fig. 3 showing the target route R1, the target route R1 (and the work vehicle 10) generated for the work site F1 in a plan view is schematically shown. In Figs. 3 and 4, the front-rear direction D2 and the left-right direction D3 are directions based on the orientation of the base machine 11 of the work vehicle 10 shown in Figs. 3 and 4.

More specifically, as shown in Fig. 3, the target route R1 includes a plurality of work routes r11 extending between a pair of long sides (the third outline f13 and the fourth outline f14) of the work site F1. That is, in the target route R1 shown in Fig. 3, the work route r11 extending upward in the drawing from the travel start position P1 set at the lower left corner in the drawing is disposed, and a plurality of (parallel) work routes r11 along the work route r11 are disposed at regular intervals on the right in the drawing. The plurality of work routes r11 are disposed such that the work route r11 from one long side (third outline f13) of the work site F1 toward the other long side (fourth outline f14) and the work route r11 opposite thereto are alternately arranged.

Here, each of the plurality of work routes r11 is a linear route on which the work vehicle 10 moves forward while performing work with the implement 12. The interval between the adjacent work routes r11 is set on the basis of the width dimension (work width W1) of the implement 12 in the left-right direction D3, and the work vehicle 10 travels along the plurality of work routes r11, so that the planting work is performed on substantially the entire region of the work site F1 (excluding the headland region serving as the outer peripheral portion). The pair of adjacent work routes r11 are connected to each other via the non-work route r12 that connects the terminal end of one work route r 11 on the first outline f11 side and the starting end of the other work route r11 on the second outline f12 side.

The circulating route r13 is a route that continues to the terminal end of the last (second outline f12 side) work route r11 among the plurality of work routes r11 and circulates around the outer peripheral portion of the work site F1 along the outline (first to fourth outlines f11 to f14) of the work site F1. In the example in Fig. 3, the circulating route r13 extends from the lower right corner in the drawing to the lower left corner in the drawing, extends from the lower left corner in the drawing to the upper left corner in the drawing, extends from the upper left corner in the drawing to the upper right corner in the drawing, and extends from the upper right corner in the drawing to the travel end position P2 at the lower right corner in the drawing, thereby circulating on the headland region serving as the outer peripheral portion of the work site F1 one time.

According to such a target route R1, the work vehicle 10 performs the planting work while traveling to reciprocate in parallel on the work route r11 from the travel start position P1 in an inner region F11 (the inner side of the one-dot chain line in Fig. 3) excluding an outer peripheral region F12 serving as the outer peripheral portion in the work site F1. Thereafter, the work vehicle 10 performs the planting work while traveling to circulate on the circulating route r13 clockwise toward the travel end position P2 in the outer peripheral region F12. However, when the work vehicle 10 travels on the circulating route r13, it is preferable that the operator performs self-travel of the work vehicle 10 in the "manned state" in which the operator gets on the base machine 11. Thus, the work vehicle 10 can perform the planting work on substantially the entire region of the work site F1 including the outer peripheral region F12.

That is, the target route R1 includes the circulating route r13 on which the work vehicle 10 travels to circulate in the outer peripheral region F12 serving as the outer peripheral portion of the work site F1, and a reciprocating route r10 on which the work vehicle 10 travels to reciprocate in the inner region F11 located inside the outer peripheral region F12 in the work site F1. The reciprocating route r10 includes a plurality of work routes r11. Here, the pair of adjacent work routes r11 are routes on which the work vehicle 10 travels in opposite orientations and are connected to each other via the non-work route r12 on which the work vehicle 10 turns to switch the travel direction.

In other words, in the present embodiment, the target route R1 includes the reciprocating route r10 on which the work vehicle 10 travels to reciprocate in the inner region F11 of the work site F1 before the work vehicle 10 travels to circulate on the circulating route r13. The reciprocating route r10 includes a plurality of work routes r11 each having a length in a first direction (the front-rear direction D2 in the example in Fig. 3) and arranged in a second direction (the left-right direction D3 in the example in Fig. 3) orthogonal to the first direction.

As a result, the work vehicle 10 can first perform work in the inner region F11 while traveling to reciprocate on the reciprocating route r10 (the plurality of work routes r11), and then perform work in the outer peripheral region F12 while traveling to circulate around the outer peripheral portion of the work site F1 along the circulating route r13. Therefore, the work vehicle 10 can perform work while efficiently self-traveling almost without empty travel (travel without performing work) over the entire region of the work site F1 (the inner region F11 and the outer peripheral region F12). In addition, while the outer peripheral region F12 is a region where the work vehicle 10 turns along the non-work route r12 at the time of reciprocating traveling, the work vehicle 10 then travels to circulate, so that the work can also be performed in the outer peripheral region F12.

In short, since the work vehicle 10 performs work (planting work) with the implement 12 when traveling on the work route r11, as shown in Fig. 4, a plurality of seedlings V1 are planted in a passage region A1 through which (the implement 12 of) the work vehicle 10 has passed in the inner region F11. Here, in the passage region A1, a plurality of (eight) work lines Vr1 to Vr8 (seedling lines) arranged in the left-right direction D3 orthogonal to the advancing direction of the work vehicle 10 are formed.

Similarly, since the work vehicle 10 performs work (planting work) with the implement 12 also when traveling on the circulating route r13, a plurality of seedlings V1 are also planted in a passage region A2 through which the work vehicle 10 (indicated by an imaginary line (two-dot chain line) in Fig. 4) has passed in the outer peripheral region F12. Although not shown in Fig. 4, a plurality of (eight) work lines Vr1 to Vr8 (seedling lines) arranged in the left-right direction D3 orthogonal to the advancing direction of the work vehicle 10 are formed in the passage region A2.

The target route R1 is not limited to the route shown in Fig. 3 and is set as appropriate. In Fig. 3, the work vehicle 10 first travels in the inner region F11 and then travels in the outer peripheral region F 12, but the travel order of the work vehicle 10 is not limited thereto. For example, the work vehicle 10 may first travel in the outer peripheral region F12 and then travel in the inner region F11.

In the example in Fig. 3, the non-work route r12 set in the outer peripheral region F12 includes the turning route for the right turn in gentle turning, but a turning aspect for changing the azimuth of the work vehicle 10 is not limited to the "gentle turning". The non-work route r12 may include, for example, a turning aspect of causing the base machine 11 to turn while switching between forward and backward in order to enable turning of the base machine 11 within a limited space, such as a so-called "fishtail turn". Similarly, an appropriate turning aspect such as "gentle turning" or "fishtail turn" can be applied to a turning aspect of the work vehicle 10 when traveling on the circulating route r13.

In order to realize the self-travel of the work vehicle 10 as described above, it is necessary to recognize and register the shape of the work site F1 in advance. As an example, the operator gets on the work vehicle 10 and drives to make one round along the outer periphery of the work site F1 that is a registration target (teaching travel), and the terminal device 20 acquires position information during traveling from the work vehicle 10, recognizes the position and the shape of the work site F1 on the basis of the position information, and registers the work site F1. The circulating route r13 is generated on the route on which the work vehicle 10 travels in such teaching travel. Registering the work site F1 on the basis of such teaching travel or the past record information of the travel route enables generating the target route R1 in a state of avoiding, from the beginning, an obstacle such as a culvert that is difficult to detect only with the detection device 15.

A plurality of work routes r11 may be generated while leaving a width for a plurality of strokes in the outer peripheral region F12 of the work site F1, and a circulating route r13 for a plurality of strokes may be generated along the outer periphery of the work site F1. That is, the target route R1 may include the circulating route r13 of two or more rounds so that the work vehicle 10 circulates around the inner region F11 two or more rounds. In this case, after working and traveling on the plurality of work routes r11, the work vehicle 10 sequentially travels on the circulating route r13 for a plurality of rounds from the inside to the outside. At that time, it is preferable that the work vehicle 10 self-travels on the inner circulating route r13 in an unmanned state, and self-travels on the outermost circulating route r13 in a manned state.

The number of work routes r11 included in the reciprocating route r10 is not limited to twelve (six reciprocations), and may be eleven (five reciprocations and a half) or less, or thirteen (six reciprocations and a half) or more. The number of the work routes r11 is not limited to an even number, and may be an odd number.

### Unworkable region

Next, a process related to the unworkable region Ai1 in the control method will be described with reference to Figs. 5 to 8.

That is, as described above, in the work performed by the work vehicle 10 while self-traveling in the work site F1, for example, the unworkable region Ai1 where the work cannot be performed due to the reason that the work vehicle 10 cannot enter may exist in the work site F1. In particular, in the work site F1 having an irregular shape, such an unworkable region Ai1 is likely to occur due to, for example, the work width W1 of the work vehicle 10. However, if the presence of the unworkable region Ai1 is found only after completion of the work, a plan such as manually performing the work cannot be made in advance, which leads to a decrease in work efficiency.

Fig. 5 shows an example in which the unworkable region Ai1 is generated when at least one set of opposing sides among the plurality of sides (the first outline f11 to the fourth outline f14) defining the work site F1 has a non-parallel shape (irregular shape). In the example in Fig. 5, the work site F1 has a trapezoidal shape in which the first outline f11 and the second outline f12 are not parallel. In Fig. 5, a case where the reciprocating route r10 (a plurality of work routes r11) is generated in parallel to the first outline f11 among the plurality of sides (the first outline f11 to the fourth outline f14) will be referred to as "Example 1", and a case where the reciprocating route r10 is generated in parallel to the second outline f12 will be referred to as "Example 2". In Fig. 5 and the like, the non-work route r12 is not shown.

As described above, depending on a shape of the work site F1 and/or a direction in which the work is performed on the reciprocating route r10, that is, a first direction (also referred to as a "work direction") which is the extension direction of the work route r11, there may be the unworkable region Ai1 remaining in the unworked state after the end of the work based on self-travel. It is difficult to completely eliminate such an unworkable region Ai1 particularly in the work site F1 having an irregular shape despite consideration of a type, a size, and the like of the work vehicle 10 or the implement 12.

Therefore, in the control method according to the present embodiment, the following configuration makes it possible to improve the work efficiency with respect to the work site F1 even when the unworkable region Ai1 is generated.

That is, the control method according to the present embodiment is a control method for the work vehicle 10 that performs work while self-traveling in the work site F1. This control method includes obtaining presentation information and outputting the presentation information. The presentation information is information regarding the unworkable region Ai1 where work during self-traveling of the work vehicle 10 is not performed in the work site F1.

In the present embodiment, the arithmetic processing unit 214 of the information processing unit 21 performs arithmetic processing to obtain presentation information regarding the unworkable region Ai1 in the work site F1. Specifically, after the generation processing unit 211 generates the target route R1, the arithmetic processing unit 214 calculates the presentation information before the output processing unit 213 outputs the route data of the target route R1 to the work vehicle 10.

Here, the arithmetic processing unit 214 calculates the presentation information on the basis of, for example, the implement information, the work vehicle information, the field information, the work information, and the like used for generating the target route R1, and the information regarding the target route R1 generated by the generation processing unit 211. That is, since the shape of the work site F1, the work direction in which the work is performed on the reciprocating route r10, and the like are specified from these pieces of information, it is possible to estimate the unworkable region Ai1 remaining in the unworked state after the work based on the self-travel of the work vehicle 10 is completed without actually causing the work vehicle 10 to self-travel.

As an example, the arithmetic processing unit 214 can calculate the passage regions A1 and A2 through which the work vehicle 10 passes in the work site F1 as a simulation result when the work vehicle 10 travels along the target route R1 as shown in Fig. 5. As a result, the arithmetic processing unit 214 can obtain the unworkable region Ai1 that may be generated in the work site F1 without actually causing the work vehicle 10 to self-travel. Here, as a result of the arithmetic processing, in a case where there is no unworkable region Ai1, the arithmetic processing unit 214 obtains, as the presentation information, that there is no unworkable region Ai1 (or that the area of the unworkable region Ai1 is 0).

In short, in the control method according to the present embodiment, since the presentation information regarding the unworkable region Ai1 where the work during the self-traveling of the work vehicle 10 is not performed is obtained (through arithmetic processing) and output, the presence of the unworkable region Ai1 can be determined before the completion of the work based on the self-travel. Therefore, in the unworkable region Ai1, it is possible to make a plan in advance such as manually performing the work instead of the work based on the self-travel. Therefore, even in a case where the unworkable region Ai1 is generated, the work efficiency with respect to the work site F1 can be improved.

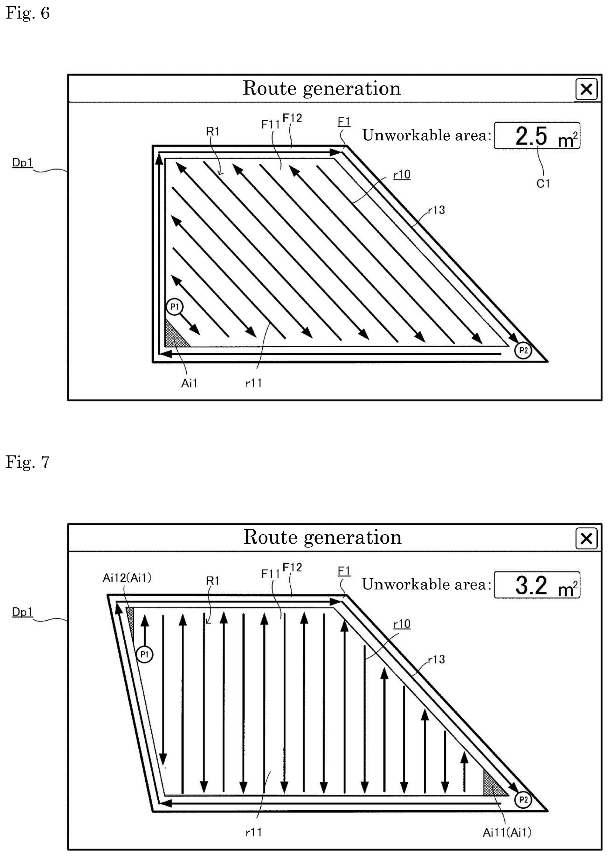

Here, in the control method according to the present embodiment, the output of the presentation information includes display of the presentation information on a display unit (for example, the operation display unit 23). That is, the presentation information obtained by the arithmetic processing unit 214 is output by the output processing unit 213, and the output of the presentation information includes the display on the display unit (operation display unit 23) as described above. As an example, as shown in Fig. 6, a route generation display screen Dp1 displayed on the operation display unit 23 includes presentation information regarding the unworkable region Ai1.

As a result, the user (operator) can visually recognize the presentation information regarding the unworkable region Ai1 where the work during the self-traveling of the work vehicle 10 is not performed. Therefore, even when the information amount of the presentation information is large, the presentation information is easily accurately conveyed to the user.

In the example in Fig. 6, in the route generation display screen Dp1 displayed on the operation display unit 23, the generated target route R1 and the unworkable region Ai1 are displayed in an identifiable manner on a map imitating the work site F1. In the present embodiment, the presentation information includes an image indicating the unworkable region Ai1 in the work site F1. In the drawings such as Fig. 6 showing the display screen Dp1, the reference numerals and the lead lines are merely provided for description, and are not actually displayed on the display screen Dp1.

As a result, the user (operator) can ascertain which region of the work site F1 is the unworkable region Ai1, and thus, it is easy to make a plan such as manually performing work on the unworkable region Ai1.

In the example in Fig. 6, area information C1 indicating the area of the unworkable region Ai1 is displayed on the display screen Dp1. In the present embodiment, when the unworkable region Ai1 that may be generated in the work site F1 is obtained through arithmetic processing, the arithmetic processing unit 214 also obtains the area of the unworkable region Ai1 through arithmetic processing and causes the area to be included in the presentation information. That is, the presentation information includes the area information C1 regarding the area of the unworkable region Ai1.

As a result, since the user (operator) can ascertain the area of the unworkable region Ai1, that is, the size of the unworkable region Ai1, it is easy to make a plan such as manually performing work on the unworkable region Ai1. Alternatively, in a case where the area of the unworkable region Ai1 is small (close to 0), the unworkable region Ai1 may be ignored. The area information C1 is not limited to information directly indicating the area of the unworkable region Ai1, and may be, for example, information indicating a ratio of the area of the unworkable region Ai1 to the area of the work site F1 in percentage or the like.

Here, while the work site F1 includes the inner region F11 and the outer peripheral region F12 surrounding the inner region F 11, at least a part of the outer peripheral region F12 is excluded from the unworkable region Ai1. In the present embodiment, as an example, the entire outer peripheral region F12 is excluded from the unworkable region Ai1. That is, in the present embodiment, even if there is a region where work during self-traveling of the work vehicle 10 is not performed in the outer peripheral region F12, this region is not included in the unworkable region Ai1. That is, the area information C1 does not include the area of the outer peripheral region F12.

As a result, the user (operator) can recognize, as the unworkable region Ai1, only a region where no work is performed in the inner region F11 where the work vehicle 10 travels to reciprocate. However, it is not essential that the entire outer peripheral region F12 is excluded from the unworkable region Ai1, and only a part of the outer peripheral region F12 may be excluded from the unworkable region Ai1. For example, a region excluded from the unworkable region Ai1 may change depending on the presence or absence of the circulating work in which the work vehicle 10 performs work while traveling to circulate along the circulating route r13. As an example, in a case where the outer peripheral region F12 has a width corresponding to a plurality of strokes, and the work vehicle 10 performs the planting work while traveling to circulate along the circulating route r13 for one round generated on the inner peripheral side (inner region F11 side) of the outer peripheral region F12, only the region outside the circulating route r13 in the outer peripheral region F12 is excluded from the unworkable region Ai1. On the other hand, when the work vehicle 10 does not perform the circulating work in the outer peripheral region F12, the entire outer peripheral region F12 is excluded from the unworkable region Ai1.

For example, as shown in Fig. 7, depending on a shape of the work site F1 and/or a work direction in which work is performed on the reciprocating route r10, a plurality of unworkable regions Ai1 may exist in one work site F1. In the example in Fig. 7, there are two unworkable regions Ai11 and Ai12 in the work site F1.

In the present embodiment, when there are a plurality of unworkable regions Ai1 as described above, the presentation information can be presented collectively for the plurality of unworkable regions Ai1. In the example in Fig. 7, the area information C1 represents a sum (total value) of the area of the unworkable region Ai11 and the area of the unworkable region Ai12.

As a result, the user (operator) can easily ascertain how many unworkable regions Ai1 exist in the entire work site F1. Therefore, it is easy to determine whether to ignore the unworkable region Ai1.

In addition, in a case where there are a plurality of unworkable regions Ai1, the presentation information may be presented for each unworkable region Ai1. That is, in the example in Fig. 7, the area of the unworkable region Ai11 and the area of the unworkable region Ai12 are individually displayed as the area information C1.

As a result, the user (operator) can ascertain information regarding each of the plurality of unworkable regions Ai1, and it becomes easy to make a plan such as manually performing work on each of the unworkable regions Ai1.

The control method according to the present embodiment further includes selecting one of a plurality of modes having different presentation aspects of the presentation information. Here, the plurality of modes include, for example, a batch mode of collectively presenting the presentation information regarding the plurality of unworkable regions Ai1 and an individual mode of presenting the presentation information regarding each unworkable region Ai1. For example, the batch mode and the individual mode are switched according to a user operation on the terminal device 20. According to this configuration, the presentation information can be presented in an appropriate presentation aspect at each time.

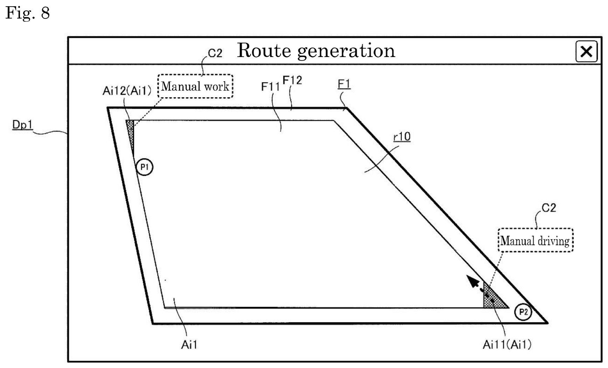

In the present embodiment, as shown in Fig. 8, the presentation information includes alternative information C2 regarding alternative work performed instead of the work during the self-traveling of the work vehicle 10 for the unworkable region Ai1. In the example in Fig. 8, the alternative information C2 is individually shown for each of the unworkable region Ai11 and the unworkable region Ai12.

Outputting (for example, displaying) such alternative information C2 enables the user (operator) to easily make a plan such as manually performing work on the unworkable region Ai1.

The alternative work includes at least one of first work and second work. The first work is work (manual driving work) performed by an operator driving the work vehicle 10. The second work is work performed manually (by a person) without using the work vehicle 10.

For example, as shown in Fig. 8, the alternative information C2 is presented with the first work (manual driving work) as the alternative work for the unworkable region Ai11 that the work vehicle 10 can enter and of which the area is equal to or more than a predetermined value. That is, the alternative work based on the first work (manual driving work) is proposed for the unworkable region Ai1 where the work is not performed due to generation of the target route R1 or the like. Regarding the first work, it is preferable that the alternative information C2 also indicates a recommended travel direction (work direction) of the work vehicle 10 with an arrow or the like.

On the other hand, for the unworkable region Ai12 that it is difficult for the work vehicle 10 to enter, the alternative information C2 is presented with the second work (manual work) as the alternative work. That is, the alternative work based on the second work (manual work) is proposed for the unworkable region Ai1 where the work is not performed due to a size of the work vehicle 10 and/or the implement 12. Regarding the second work, the alternative information C2 may include necessary agricultural tools, prediction of work time, and the like.

According to this configuration, since it is presented which of the first work (manual driving work) or the second work (manual work) is to be used as an alternative for the unworkable region Ai1, a user (operator) can easily make a plan for the work in the unworkable region Ai1.

### Route generation process

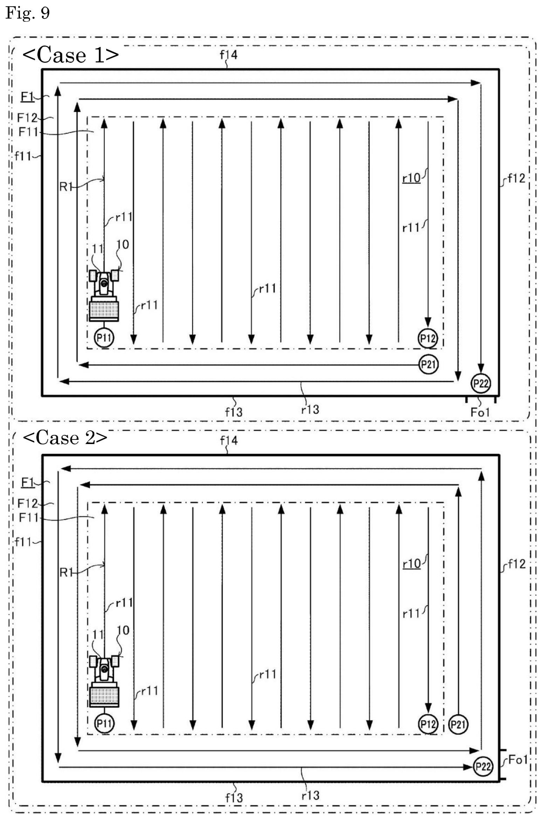

Next, a process related to generation of the target route R1 in the control method will be described with reference to Figs. 9 to 15. The control method according to the present embodiment is referred to as a "control method for the work vehicle 10" in that the target route R1 for self-travel of the work vehicle 10 is generated, and is not limited to the method of directly controlling the work vehicle 10 as long as a function of generating the target route R1 is provided. That is, the "control method for the work vehicle 10" according to the present embodiment is synonymous with a "route generation method".

That is, as described above, in the work site F1 such as a field, for example, a sloped exit Fo1 (see Fig. 9) is provided at any position of the outer shape of the work site F1, and when the work vehicle 10 that has traveled to circulate around the outer peripheral region F12 exits from the work site F1, it is necessary to align the orientation of the base machine 11 toward the exit Fo1. In particular, in order to prevent the work site F1 from being damaged in the work site F1 after the work is completed, it is necessary to pay great attention to rotation in the work site F1, which leads to a decrease in work efficiency.

Fig. 9 shows an example of the target route R1 generated in a case where an entrance (exit Fo1) that allows the work vehicle 10 to enter and exit the work site F1 is provided at one corner of the work site F1. In the example in Fig. 9, the work site F1 has a rectangular shape having a first outline f11 to a fourth outline f14, and the exit Fo1 is provided at a corner between the second outline f12 and the third outline f13. In Fig. 9, it is assumed that a circulating route r13 for two strokes is generated along the outer periphery of the work site F1. In Fig. 9, the case where the exit Fo1 is provided at the third outline f13 among the plurality of sides (the first outline f11 to the fourth outline f14) will be referred to as "Example 1", and the case where the exit Fo1 is provided at the second outline f12 will be referred to as "Example 2". In Fig. 9 and the like, the non-work route r12 is not shown.

In "Example 1" in Fig. 9, the work vehicle 10 can exit from the exit Fo1 while keeping the orientation of the base machine 11 by passing through an end point P22 (the same as the travel end position P2) of the circulating route r13 from the fourth outline f14 side toward the third outline f13 side (downward in Fig. 9). On the other hand, in "Example 2" in Fig. 9, the work vehicle 10 can exit from the exit Fo1 while keeping the orientation of the base machine 11 by passing through an end point P22 of the circulating route r13 from the first outline f11 side toward the second outline f12 side (rightward in Fig. 9). As described above, although an appropriate orientation of the base machine 11 when passing through the end point P22 of the circulating route r13 varies depending on the position of the exit Fo1, if the travel direction of the work vehicle 10 at the end point P22 is inappropriate, rotation of the base machine 11 or the like is required, which leads to a decrease in work efficiency.

Therefore, in the control method according to the present embodiment, work efficiency with respect to the work site F1 can be improved by the following configuration.

That is, the control method according to the present embodiment is a control method for the work vehicle 10 that performs work while self-traveling in the work site F1 along the target route R1. This control method includes generating the target route R1. The control method includes designating a travel direction of the work vehicle 10 at the end point P22 of the circulating route r13 when generating the circulating route r13 in the target route R1. The circulating route r13 is a route on which the work vehicle 10 travels to circulate around the outer peripheral region F12 of the work site F1.

In the present embodiment, when generating the circulating route r13, the generation processing unit 211 of the information processing unit 21 designates the travel direction of the work vehicle 10 at the end point P22 of the circulating route r13. When the travel direction of the work vehicle 10 at the end point P22 is designated, a circulating travel direction is also automatically determined.

As an example, when the exit Fo1 is present at the third outline f13 as in "Example 1" shown in Fig. 9, the generation processing unit 211 designates the travel direction of the work vehicle 10 at the end point P22 to be directed toward the third outline f13 having the exit Fo1. In this case, the generation processing unit 211 designates a circulating travel direction of the circulating route r13 such that the work vehicle 10 travels to circulate in the clockwise direction in the outer peripheral region F12 in a plan view. On the other hand, as in "Example 2" shown in Fig. 9, when the exit Fo1 is present at the second outline f12, the generation processing unit 211 designates a travel direction of the work vehicle 10 at the end point P22 to be directed toward the second outline f12 having the exit Fo1. In this case, the generation processing unit 211 designates a circulating travel direction of the circulating route r13 such that the work vehicle 10 travels to circulate in the counterclockwise direction in the outer peripheral region F12 in a plan view.

In short, according to the control method according to the present embodiment, when the circulating route r13 is generated in the target route R1, the travel direction of the work vehicle 10 at the end point P22 of the circulating route r13 can be designated. Therefore, for example, by designating the travel direction of the work vehicle 10 at the end point P22 to be directed to a certain outline side of the exit Fo1, at the end point P22 (travel end position P2), the work vehicle 10 can exit from the exit Fo1 while keeping the orientation of the base machine 11 without rotating the orientation of the base machine 11. Therefore, it is possible to improve work efficiency with respect to the work site F1.

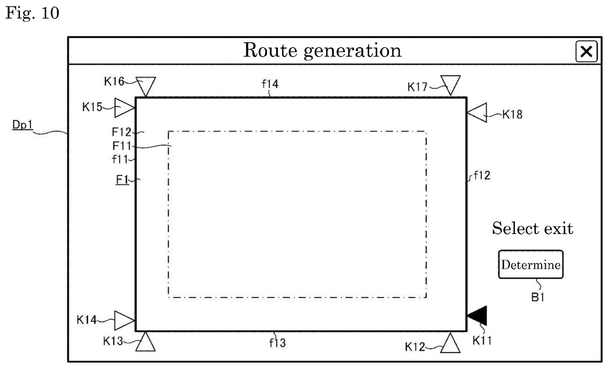

Here, the generation processing unit 211 can designate the travel direction of the work vehicle 10 at the end point P22 of the circulating route r13 according to an operation of a user (operator). Specifically, the user designates the exit Fo1 in the work site F1 on the route generation display screen Dp1 displayed on the display unit (operation display unit 23) as shown in Fig. 10.

That is, the control method according to the present embodiment includes designating the position of the exit Fo1 of the work vehicle 10 in the work site F1. When the exit Fo1 is designated, the generation processing unit 211 sets the end point P22 (travel end position P2) of the circulating route r13 near the exit Fo1, and designates the travel direction of the work vehicle 10 at the end point P22 to be directed toward a certain outline side having the exit Fo1. When the travel direction of the work vehicle 10 at the end point P22 of the circulating route r13 is determined, the generation processing unit 211 also determines a circulating travel direction of the circulating route r13 according to the travel direction.

Specifically, as shown in Fig. 10, when a determination button B1 is operated in a state in which candidate points K11 to K18 are displayed at a plurality of positions in the work site F1 on the display screen Dp1 and any one of the candidate points K11 to K18 is selected, the generation processing unit 211 designates a position of the selected candidate point among the candidate points K11 to K18 as the position of the exit Fo1. That is, the position of the exit Fo1 can be selected from among the plurality of candidate points K11 to K18 registered in advance.

This simplifies the designation of the position of the exit Fo1. The candidate points K11 to K18 may be set, for example, at the center (midpoint) of each side (the first outline f11 to the fourth outline f14) defining the work site F1 in addition to or instead of the corner of the work site F1. A position of the exit Fo1 is not limited to the configuration selected from among the plurality of candidate points K11 to K18, and a user may be able to designate any position in the work site F1.

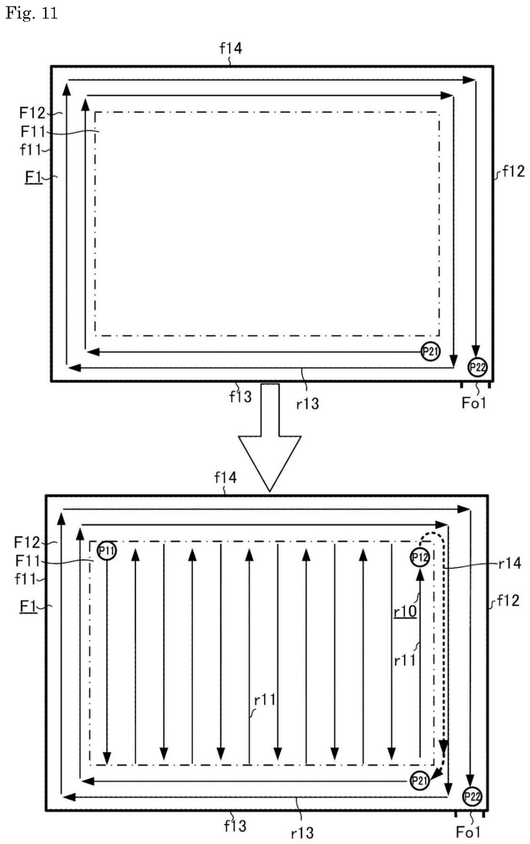

As described above, when the position of the exit Fo1 is designated, and the position of the end point P22 (travel end position P2) of the circulating route r13, the travel direction of the work vehicle 10 at the end point P22, and the circulating travel direction of the circulating route r13 are determined, the circulating route r13 in the target route R1 is generated as shown in Fig. 11. Here, if the number of rounds of the circulating route r13 is determined, the start point P21 of the circulating route r13 is also determined as shown in Fig. 11. In this state, the generation processing unit 211 generates the reciprocating route r 10 in the inner region F11 of the work site F1.

However, in this case, in a case where the reciprocating route r10 as shown in the lower part of Fig. 11 is generated, the work vehicle 10 needs to move to the start point P21 of the circulating route r13 when the work vehicle 10 travels on the reciprocating route r10 from the start point P11 (the same as the travel start position P1) of the reciprocating route r10 and reaches the end point P12 of the reciprocating route r10. In this case, the work vehicle 10 travels on an empty travel route R14 for about one stroke of the work route r11 without performing work. Therefore, the control method according to the present embodiment includes generating the reciprocating route r10 as follows.

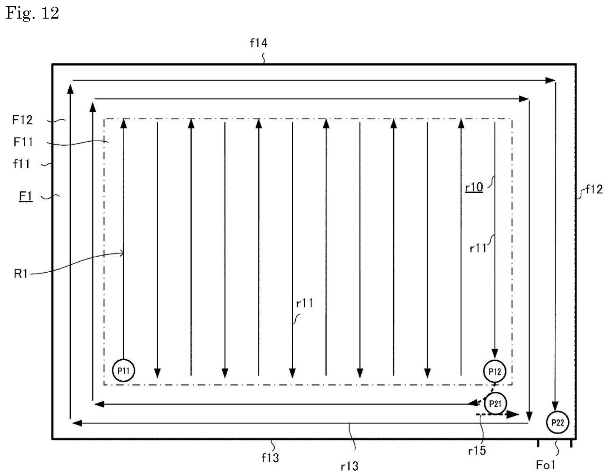

That is, in the control method according to the present embodiment, as shown in Fig. 12, the reciprocating route r10 is generated such that the end point P12 of the reciprocating route r10 is located within a predetermined distance from the start point P21 of the circulating route r13. In other words, the start point P11 and the end point P12 of the reciprocating route r10 are set such that the end point P12 of the reciprocating route r10 is located near the start point P21 of the circulating route r13.

As a result, when the work vehicle 10 self-travels along the target route R1, the work vehicle 10 that has traveled on the reciprocating route r10 can move from the end point P12 of the reciprocating route r10 to the start point P21 of the circulating route r13 almost without traveling. In the example in Fig. 12, a switch turn route r15 is generated at the start point P21 of the circulating route r13 from the end point P12 of the reciprocating route r10 such that the orientation of the base machine 11 of the work vehicle 10 is aligned with the extension direction of the circulating route r13 at the start point P21 of the circulating route r13.

Here, the end point P12 of the reciprocating route r10 is located on the same side as the end point P22 of the circulating route r13 in the first direction (work direction). In the example in Fig. 12, the end point P12 of the reciprocating route r10 is located on the same third outline f13 side as the end point P22 of the circulating route r13 in the work direction. As a result, when the vehicle travels to circulate on the circulating route r13, the vehicle can circulate around the outer peripheral region F12 by an integral round, and unnecessary travel can be suppressed.

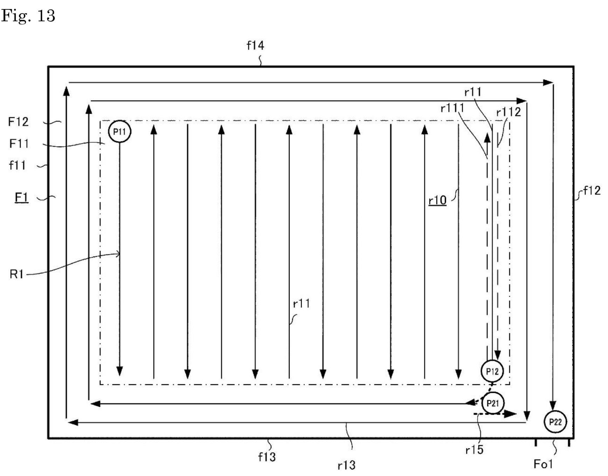

As another example different from Fig. 12, as shown in Fig. 13, the reciprocating route r10 may be generated such that one work route r11 in the reciprocating route r10 is assigned to reciprocating travel. In the example in Fig. 13, among the plurality of work routes r11 in the reciprocating route r10, the final work route r11 is allocated to the reciprocating travel. Specifically, for the work route r11, a forward route r111 on which the work vehicle 10 travels from the third outline f13 side to the fourth outline f14 side and a return route r112 on which the work vehicle 10 travels from the fourth outline f14 side to the third outline f13 side are assigned.

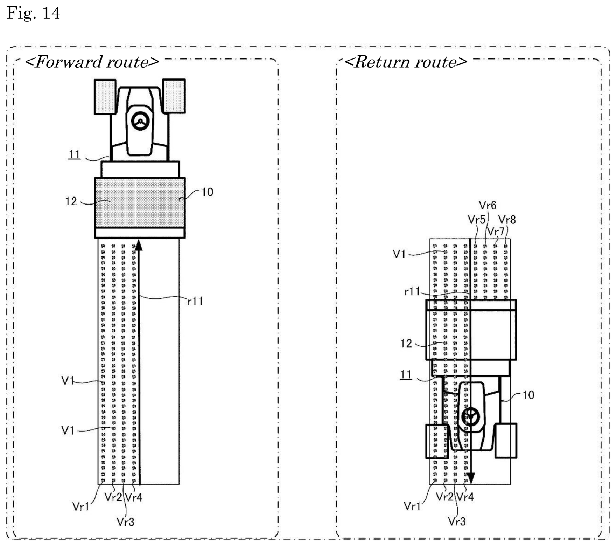

In this case, when the work vehicle 10 travels on the forward route r111 and when the work vehicle travels on the return route r112, passage regions through which the implement 12 passes at least partially overlap. Therefore, the work vehicle 10 adjusts the work width W1 during traveling on the forward route r111 and during traveling on the return route r112, and avoids the work from being performed in an overlapping manner on the forward route r111 and the return route r112. That is, the control system 1 according to the present embodiment has a function of "row stop control" of not performing work on some of the plurality of (eight in the present embodiment) work lines Vr1 to Vr8. For example, as shown in Fig. 14, the work width W1 is adjusted through the row stop control as necessary.

That is, in the example in Fig. 14, when the work vehicle travels on the forward route r111 along the work route r11 closest to the second outline f12, the row stop control is performed such that work is not performed on the work lines Vr5 to Vr8 among the plurality of work lines Vr1 to Vr8, and the work is performed on only the remaining work lines Vr1 to Vr4. When the work vehicle 10 travels on the return route r112 along the work route r11, the row stop control is performed such that the work is not performed on the work lines Vr1 to Vr4 among the plurality of work lines Vr1 to Vr8, and the work is performed on only the remaining work lines Vr5 to Vr8. As a result, the work vehicle 10 can perform work (planting) on all of the plurality of work lines Vr1 to Vr8 while traveling to reciprocate along the work route r11. Here, it is preferable to avoid, if possible, the front wheels 141 or the rear wheels 142 from stepping on the work lines on which the work has been performed during traveling on the return route r112. Specifically, for example, the work lines Vr1 to Vr8 on which the work is performed may be allocated to the forward route r111 and the return route r112 such that the front wheels 141 or the rear wheels 142 do not pass on the work lines on which the work has been performed during traveling on the return route r112.

As described above, by assigning one work route r11 in the reciprocating route r10 to the reciprocating travel, and further adjusting the work width W1 through the row stop control or the like as necessary, the end point P12 of the reciprocating route r10 can be located within a predetermined distance from the start point P21 of the circulating route r13.

Here, in a case where the work width W1 is adjusted through the row stop control as described above, the number of work routes r11 on which the row stop control is performed may be reduced as much as possible. In short, when the row stop control is performed, the remaining seedling amount of the seedling mount of the implement 12 varies from row to row, so that the generation of the target route R1 that does not frequently use the row stop control may be preferred. For example, in a case where work is performed with an eight-row rice planter in a state in which the work for remaining ten work lines remains, the work route r11 on which the row stop control is performed can be suppressed to only one by performing "all-row work" of performing the work on all of the plurality of work lines Vr1 to Vr8 and the row stop control of performing work for two rows.

A mode of reducing the number of work routes r11 on which the row stop control is performed and a mode of actively performing the row stop control to adjust the position of the end point P12 of the reciprocating route r10 may be selectable by user setting, for example.

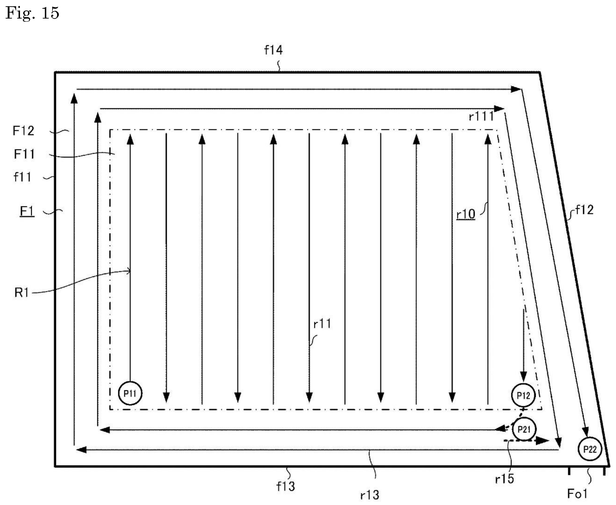

As shown in Fig. 15, when at least one of the first outline f11 to the fourth outline f14 as the outlines of the work site F1 is inclined with respect to the work route r11, only a part on the same work route r11 is set as a row stop position. That is, in the example in Fig. 15, the plurality of work routes r11 are generated parallel to the first outline f11 with the first outline f11 as a reference side. In this case, among the plurality of work routes r11, the passage region A1 at the time of traveling on the work route r11 located on the side (right side in Fig. 15) farthest from the first outline f11 (reference side) and the passage region A2 at the time of traveling on the circulating route r13 overlap only in triangular overlapping regions. Therefore, in the example in Fig. 15, the work vehicle 10 performs the "row stop control" only when traveling on a part of the starting end side of the work route r11 located on the side farthest from the first outline f11 (reference side).

Therefore, when one side of the outlines of the work site F1 is set as a reference side for defining the first direction (a work direction that is an extension direction of the work route r11), the reciprocating route r10 is generated such that the start point P11 of the reciprocating route r10 is located on the reference side in the second direction (a direction orthogonal to the first direction). That is, in the example in Fig. 15, the first outline f11 among the plurality of sides (the first outline f11 to the fourth outline f14) defining the work site F1 is set as a reference side for defining the work direction, and the plurality of work routes r11 in the reciprocating route r10 are all set in parallel to the first outline f11 serving as the reference side. In this case, the reciprocating route r10 is generated such that the start point P11 of the reciprocating route r10 is located on the reference side (first outline f11) side in the second direction. Here, whether the start point P11 of the reciprocating route r10 is set on the third outline f13 side or the fourth outline f14 side is determined on the basis of the even/odd number of the work routes r11 and a position of the end point P12 of the reciprocating route r10.

As described above, since the reciprocating travel is started from the reference side, the "row stop control" is performed only when the work vehicle 10 travels on the work route r11 closer to the end point P12 of the reciprocating route r10, and the "all-row work" is performed when the work vehicle 10 travels on the other work routes r11. Therefore, the number of work routes r11 on which the row stop control is performed can be reduced as much as possible.

Here, the reference side for defining the work direction can be freely set according to an operation of a user (operator). Specifically, for example, on the route generation display screen Dp1, the user selects any side from among the plurality of sides (the first outline f11 to the fourth outline f14) defining the work site F1 as the reference side to designate the reference side.

### Reciprocating route generation process

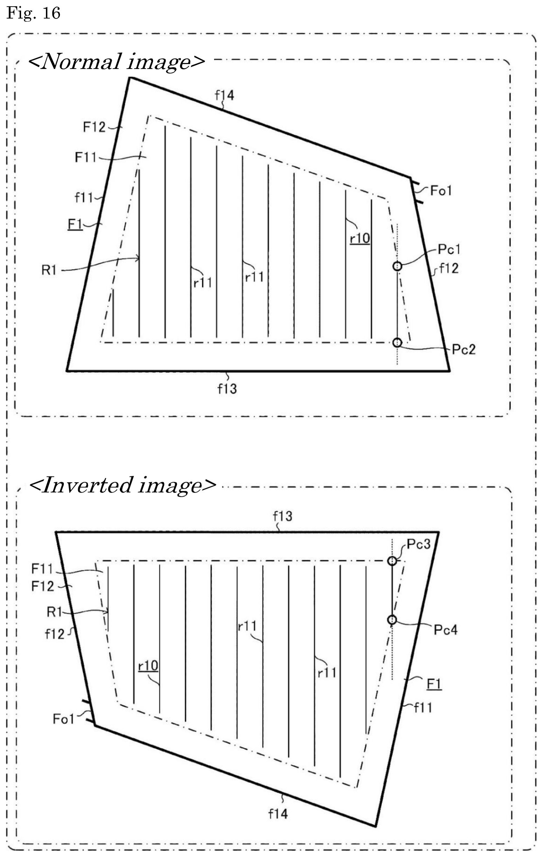

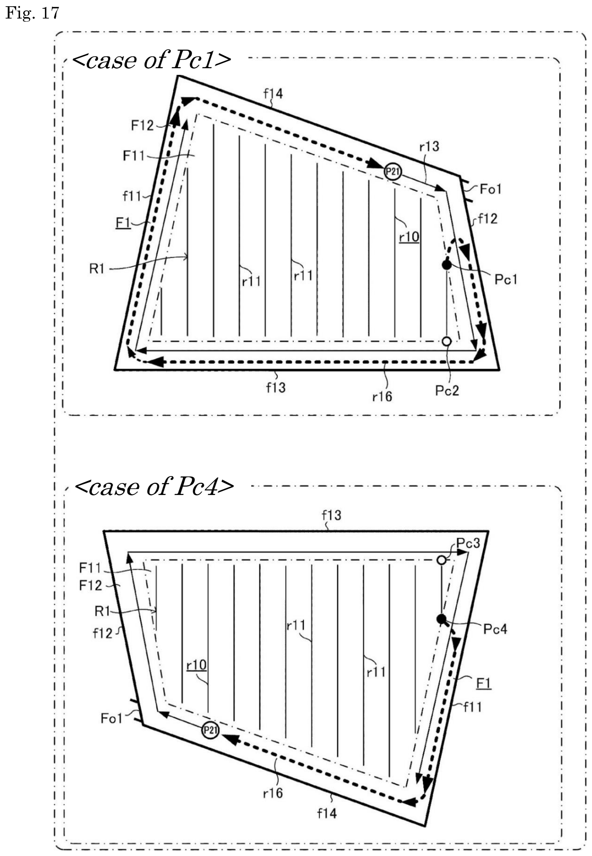

Next, a process related to generation of the reciprocating route r10 in the control method will be described with reference to Figs. 16 and 17. The control method according to the present embodiment is referred to as a "control method for the work vehicle 10" in that the target route R1 (including the reciprocating route r10) for self-travel of the work vehicle 10 is generated, and is not limited to the method of directly controlling the work vehicle 10 as long as a function of generating the target route R1 (including the reciprocating route r10) is provided. That is, the "control method for the work vehicle 10" according to the present embodiment is synonymous with a "route generation method".

In the control method described below, similarly to the above-described example, a case where the generation processing unit 211 generates the reciprocating route r10 in the inner region F11 of the work site F1 in a state in which the start point P21 of the circulating route r13 is determined will be described. Here, it is assumed that the start point P21 of the circulating route r13 is determined not only for the position (of the start point P21) in the work site F1 but also for the travel direction of the work vehicle 10 (at the start point P21) in the circulating route r13.

Here, in order to smoothly communicate from (the end point P12 of) the reciprocating route r10 to (the start point P21 of) the circulating route r13, the reciprocating route r10 is generated on the basis of (the position of) the start point P21 of the circulating route r13 (and/or the travel direction). Therefore, in the present embodiment, the end point P12 of the reciprocating route r10 is determined on the basis of the start point P21 of the circulating route r13, so that the reciprocating route r10 is generated from the end point P12 to the start point P11 of the reciprocating route r10.

That is, the control method according to the present embodiment is a control method for the work vehicle 10 that performs work while self-traveling in the work site F1 along the target route R1. This control method includes generating the target route R1 including the circulating route r13 and the reciprocating route r10. The circulating route r13 is a route on which the work vehicle 10 travels to circulate around the outer peripheral region F12 of the work site F1. The reciprocating route r10 is a route on which the work vehicle 10 travels to reciprocate in the inner region F 11 of the work site F1 before the work vehicle 10 travels to circulate on the circulating route r13. The control method includes proposing a plurality of end point candidates Pc1 to Pc4 (see Fig. 16) that are candidates for the end point P12 of the reciprocating route r10, and selecting "one end point candidate" from among the plurality of end point candidates Pc1 to Pc4 as the end point P12 of the reciprocating route r10.

In the present embodiment, the generation processing unit 211 of the information processing unit 21 determines the end point P12 of the reciprocating route r10. The generation processing unit 211 proposes a plurality of end point candidates Pc1 to Pc4 as exemplified in Fig. 16, selects any one of the end point candidates from among the plurality of end point candidates Pc1 to Pc4 as the end point P12 of the reciprocating route r10, and thus determines the end point P12 of the reciprocating route r10. When the end point P12 is determined, the generation processing unit 211 can generate the reciprocating route r10 from the end point P12 to the start point P11.

As described above, it is possible to select the end point P12 of the reciprocating route r10 from among the plurality of end point candidates Pc1 to Pc4, and thus it is possible to generate the reciprocating route r10 so that smooth communication can be made from (the end point P12 of) the reciprocating route r10 to (the start point P21 of) the circulating route r13.

Specifically, when the work direction and the work interval are designated, the generation processing unit 211 sets a plurality of work routes r11 configuring the reciprocating route r10 in the inner region F11 of the work site F1 according to the work direction and the work interval as indicated in "normal image" in Fig. 16. Here, the work direction is an extension direction of the work route r11, and is synonymous with a "first direction". The work interval is an interval between the adjacent work routes r11 which is set on the basis of the width dimension (work width W1) of the implement 12 in the left-right direction D3, and is an interval between the work routes r11 in the second direction (orthogonal to the first direction).

In the example of "normal image" in Fig. 16, the reciprocating route r10 is generated from the first outline f11 side to the second outline f12 (from the left side to the right side in the drawing) with the direction orthogonal to the third outline f13 as the work direction. In this case, depending on whether the start point P11 of the reciprocating route r10 is set on the third outline f13 side (lower side in the drawing) or the fourth outline f14 side (upper side in the drawing), as shown in Fig. 16, two end point candidates Pc1 and Pc2 are generated as candidates for the end point P12 of the reciprocating route r10. That is, in a case where the start point P11 of the reciprocating route r10 is set on the fourth outline f14 side (upper side in the drawing), the reciprocating route r10 ends at the end point candidate Pe1, and in a case where the start point P11 of the reciprocating route r10 is set on the third outline f13 side (lower side in the drawing), the reciprocating route r10 ends at the end point candidate Pc2.

Subsequently, as indicated in "inverted image" in Fig. 16, in a state in which the work site F1 is rotated (inverted) by 180 degrees, the generation processing unit 211 sets the plurality of work routes r11 configuring the reciprocating route r10 in the inner region F11 of the work site F1 with the work direction and the work interval being maintained.

In the example of "inverted image" in Fig. 16, the reciprocating route r10 is generated from the second outline f12 side to the first outline f11 (from the left side to the right side in the drawing) with the direction orthogonal to the third outline f13 as the work direction. In this case, depending on whether the start point P11 of the reciprocating route r10 is set on the third outline f13 side (lower side in the drawing) or the fourth outline f14 side (upper side in the drawing), as shown in Fig. 16, two end point candidates Pc3 and Pc4 are generated as candidates for the end point P12 of the reciprocating route r10. That is, in a case where the start point P11 of the reciprocating route r10 is set on the third outline f13 side (upper side in the drawing), the reciprocating route r10 ends at the end point candidate Pc3, and in a case where the start point P11 of the reciprocating route r10 is set on the fourth outline f14 side (lower side in the drawing), the reciprocating route r10 ends at the end point candidate Pc4.

As described above, the generation processing unit 211 proposes a plurality of (here, four) end point candidates Pc1 to Pc4, which are candidates for the end point P12 of the reciprocating route r10, according to the same work direction and work interval. However, the number of proposed end point candidates is not limited to four, and may be, for example, two, three, or five or more.

Incidentally, in the present embodiment, one end point candidate to be the end point P12 of the reciprocating route r10 is automatically selected. That is, the generation processing unit 211 automatically selects "one end point candidate" as the end point P12 of the reciprocating route r10 from among the plurality of end point candidates Pc1 to Pc4 proposed as described above.

As a result, a user (operator) does not need to select "one end point candidate" from among the plurality of end point candidates Pc1 to Pc4, and the time and effort of the user for generating the reciprocating route r10 is reduced.

One end point candidate to be the end point P12 of the reciprocating route r10 is selected to smoothly communicate from the reciprocating route r10 to the circulating route r13 on the basis of the start point P21 of the circulating route r13. That is, the generation processing unit 211 selects "one end point candidate" from among the plurality of end point candidates Pc1 to Pc4 on the basis of the start point P21 of the circulating route r13 according to the selection condition determined so that smooth communication can be made from the reciprocating route r10 to the circulating route r13.

As a result, a user (operator) does not need to select "one end point candidate" from among the plurality of end point candidates Pc1 to Pc4, and the time and effort of the user for generating the reciprocating route r10 is reduced.

In the present embodiment, in particular, the condition (selection condition) for selecting one end point candidate as the end point P12 of the reciprocating route r10 includes a condition regarding at least one of the route length, the number of turns, and the turning radius from the end point candidate to the start point P21 of the circulating route r13. Here, the route length, the number of turns, and the turning radius are all the route length, the number of turns, and the turning radius in a case where the work vehicle 10 travels in the outer peripheral region F12 of the work site F1 from the end point candidate to the start point P21 of the circulating route r13.

In short, as shown in Fig. 17, in a case where the work vehicle 10 moves through a transition route r16 from the end point candidate (Pc1 or Pc4 in Fig. 17) to the start point P21 of the circulating route r13, the condition regarding at least one of the route length of the transition route r16, the number of turns, and the turning radius is the selection condition. The transition route r16 is a route that connects the end point P12 of the reciprocating route r10 and the start point P21 of the circulating route r13 and circulates around the inner region F11 in the same direction as the circulating route r13, and is a route on which the work vehicle 10 travels without performing work. In a case where the circulating route r13 has two rounds, the transition route r16 is generated on the circulating route r13 of the first round (inner side) along the outline (here, the fourth outline f14) where the start point P21 of the circulating route r13 is located, and is otherwise generated between the circulating route r13 of the first round (inner side) and the circulating route r13 of the second round (outer side).

That is, the generation processing unit 211 selects "one end point candidate" from among the plurality of end point candidates Pc1 to Pc4 on the basis of the start point P21 of the circulating route r13 in consideration of at least one of the route length, the number of turns, and the turning radius from the end point candidate to the start point P21 of the circulating route r13. As a result, smooth communication from the reciprocating route r10 to the circulating route r13 is easily made.

Specifically, the generation processing unit 211 generates the transition route r16 toward the start point P21 of the circulating route r13 for each of the plurality of end point candidates Pc1 to Pc4, and calculates the route length, the number of turns, the turning radius, and the like for each transition route r16. In the present embodiment, the selection condition includes a condition regarding all of the route length, the number of turns, and the turning radius. The selection condition is set such that the shorter the route length, the higher the evaluation value, the smaller the number of turns, the higher the evaluation value, and the larger the turning radius, the higher the evaluation value. An end point candidate having a relatively high evaluation value is selected as "one end point candidate".

As indicated in "Case of Pc1" in Fig. 17, for the end point candidate Pc1, the transition route r16 generated on the basis of the start point P21 of the circulating route r13 includes a route of sudden turn immediately after the end point candidate Pc1, and thus, the evaluation value for the turning radius is determined to be low according to the selection condition. Since the transition route r16 includes a route that turns at the corner between the second outline f12 and the third outline f13, the corner between the third outline f13 and the first outline f11, and the corner between the first outline f11 and the fourth outline f14, the number of turns is large (four times), and the evaluation value for the number of turns is determined to be low according to the selection condition. In addition, in the transition route r16, since the corner between the third outline f13 and the first outline f11 has an acute angle, rapid turning is also required here, and the evaluation value for the turning radius is determined to be lower according to the selection condition. In addition, since the route length of the transition route r16 is also long, the evaluation value for the route length is determined to be low according to the selection condition.

On the other hand, as shown in "case of Pc4" in Fig. 17, for the end point candidate Pc4, the transition route r16 generated based on the start point P21 of the circulating route r13 does not include the route of the sudden turn immediately after the end point candidate Pc4, and thus, the evaluation value for the turning radius is determined to be high according to the selection condition. Since the transition route r16 includes a route that turns only at the corner between the first outline f11 and the fourth outline f14, the number of turns is also small (one time), and the evaluation value for the number of turns is determined to be high according to the selection condition. In addition, since the route length of the transition route r16 is also short, the evaluation value for the route length is determined to be high according to the selection condition.

For the end point candidates Pc2 and Pc3, the evaluation value of the transition route r16 generated on the basis of the start point P21 of the circulating route r13 is higher than that of the end point candidate Pc1 and lower than that of the end point candidate Pc4.

Therefore, in the example in Fig. 17, the generation processing unit 211 selects the end point candidate Pc4 having the maximum evaluation value among the plurality of end point candidates Pc1 to Pc4 as "one end point candidate" that is the end point P12 of the reciprocating route r10.

As described above, the generation processing unit 211 can select, as the end point P12 of the reciprocating route r10, "one end point candidate" that can realize smooth communication from the reciprocating route r10 to the circulating route r13 among the plurality of (here, four) end point candidates Pc1 to Pc4. However, the selection condition only needs to include a condition regarding at least one of the route length, the number of turns, and the turning radius, and for example, may include only a condition regarding the number of turns or the turning radius. In this case, regardless of the length of the route, the "one end point candidate" is selected only under the condition regarding the number of turns or the turning radius.

Incidentally, the selection of one end point candidate as the end point P12 of the reciprocating route r10 may be performed according to a user's operation. That is, the process of selecting "one end point candidate" from among the plurality of end point candidates Pc1 to Pc4 is not limited to being automatically performed by the generation processing unit 211, and may be performed according to an operation of a user (operator).

In this case, the generation processing unit 211 presents the plurality of end point candidates Pc1 to Pc4 to the user (operator), for example, by displaying the end point candidates Pc1 to Pc4 on a display unit (for example, the operation display unit 23). For example, when the user performs an operation of selecting any "one end point candidate" from among the plurality of end point candidates Pc1 to Pc4 on a display screen displayed on the display unit, the generation processing unit 211 selects the end point candidate.

As a result, the user (operator) can select any end point candidate from among the plurality of proposed end point candidates Pc1 to Pc4 as the end point of the reciprocating route r10.

Also in this case, for example, it is preferable to display and visualize the positional relationship between the plurality of end point candidates Pc1 to Pc4 and the start point P21 of the circulating route r13, the transition route r16 for each of the plurality of end point candidates Pc1 to Pc4, and the like on the display screen. As a result, the user can easily select "one end point candidate" to realize smooth communication from the reciprocating route r10 to the circulating route r13.

### [5] Modifications

Modifications of the first embodiment are listed below. The modifications described below can be applied in combination as appropriate.

The control system 1 in the present disclosure includes a computer system. The computer system mainly includes one or more processors and one or more memories as hardware. The processor executes a program (work vehicle control program) recorded in the memory of the computer system to realize a function of the control system 1 in the present disclosure. The program may be prerecorded in the memory of the computer system, may be provided through a telecommunication line, or may be recorded and provided in a non-transitory recording medium, such as a memory card, an optical disk, or a hard disk drive, which is readable by the computer system. Some or all of the functional units included in the control system 1 may include an electronic circuit.

In addition, it is not essential for the control system 1 that at least some functions of the control system 1 are integrated in one housing, and the constituents of the control system 1 may be provided in a plurality of housings in a distributed manner. Conversely, in the first embodiment, functions distributed to a plurality of devices (for example, the control device 13 and the terminal device 20) may be integrated into one housing. At least some functions of the control system 1 may be realized by a cloud (cloud computing) or the like.

The terminal device 20 is not limited to a general-purpose terminal such as a tablet terminal, a smartphone, or a laptop computer, and may be configured as a dedicated terminal. A plurality of terminal devices 20 may be associated with one work vehicle 10. In this case, one work vehicle 10 can be controlled by the plurality of terminal devices 20. Conversely, one terminal device 20 may be associated with the plurality of work vehicles 10, and in this case, the plurality of work vehicles 10 can be controlled by one terminal device 20.

In addition, the target route R1 described above is merely an example, and can be changed as appropriate. For example, the work direction of the work vehicle 10 (the direction of the work route r11) and/or the travel order of the work route r11 can also be changed as appropriate.

### Additional notes of invention

Hereinafter, an outline of the invention extracted from the above-described embodiments will be additionally described. Note that configurations and processing functions, which are described in the following additional notes, can be selected and freely combined.

### <Additional Note 1>

A control method for a work vehicle that performs work while self-traveling in a work site along a target route, the control method including:
generating the target route; and
designating a travel direction of the work vehicle at an end point of a circulating route when generating the circulating route on which the work vehicle travels to circulate around an outer peripheral region of the work site in the target route.

### <Additional Note 2>

The control method for a work vehicle according to Additional Note 1, in which
the target route includes a reciprocating route on which the work vehicle travels to reciprocate in an inner region of the work site before the work vehicle travels to circulate on the circulating route, and
the reciprocating route includes a plurality of work routes each having a length in a first direction and arranged in a second direction orthogonal to the first direction.

### <Additional Note 3>

The control method for a work vehicle according to Additional Note 2, in which
the reciprocating route is generated such that an end point of the reciprocating route is located within a predetermined distance from a start point of the circulating route.

### <Additional Note 4>

The control method for a work vehicle according to Additional Note 2 or 3, in which
in a case where one side of outlines of the work site is a reference side for defining the first direction, the reciprocating route is generated such that a start point of the reciprocating route is located on a side of the reference side in the second direction.

### <Additional Note 5>

The control method for a work vehicle according to any one of Additional Notes 2 to 4, in which
the reciprocating route is generated such that one of the work routes in the reciprocating route is allocated to reciprocating travel.

### <Additional Note 6>

The control method for a work vehicle according to any one of Additional Notes 2 to 5, in which
an end point of the reciprocating route is located on the same side as an end point of the circulating route in the first direction.

### <Additional Note 7>

The control method for a work vehicle according to any one of Additional Notes 1 to 6, further including:
designating a position of an exit of the work vehicle in the work site.

### <Additional Note 8>

The control method for a work vehicle according to Additional Note 7, in which
the position of the exit is selectable from among a plurality of candidate points registered in advance.

### <Additional Note 9>

The control method for a work vehicle according to any one of Additional Notes 2 to 6, further including:
proposing a plurality of end point candidates that are candidates for an end point of the reciprocating route, and selecting one end point candidate from among the plurality of end point candidates as the end point of the reciprocating route.

### <Additional Note 10>

The control method for a work vehicle according to Additional Note 9, in which
the one end point candidate is selected according to an operation of a user.

### <Additional Note 11>

The control method for a work vehicle according to Additional Note 9, in which
the one end point candidate is automatically selected.

### <Additional Note 12>

The control method for a work vehicle according to any one of Additional Notes 9 to 11, in which
the one end point candidate is selected to smoothly communicate from the reciprocating route to the circulating route on the basis of a start point of the circulating route.

### <Additional Note 13>

The control method for a work vehicle according to Additional Note 12, in which
a condition for selecting the one end point candidate includes a condition regarding at least one of a route length, the number of turns, and a turning radius from the end point candidate to the start point of the circulating route.

### <Additional Note 14>

A work vehicle control program for causing one or more processors to execute the control method for a work vehicle according to any one of Additional Notes 1 to 13.

### <Additional Note 15>

A control method for a work vehicle that performs work while self-traveling in a work site along a target route, the control method including:
generating the target route, in which
the target route includes
a circulating route on which the work vehicle travels to circulate around an outer peripheral region of the work site, and
a reciprocating route on which the work vehicle travels to reciprocate in an inner region of the work site before the work vehicle travels to circulate on the circulating route,
the reciprocating route includes a plurality of work routes each having a length in a first direction and arranged in a second direction orthogonal to the first direction, and
the reciprocating route is generated such that an end point of the reciprocating route is located within a predetermined distance from a start point of the circulating route.

### <Additional Note 16>

A control method for a work vehicle that performs work while self-traveling in a work site along a target route, the control method including:
generating the target route, in which
the target route includes
a circulating route on which the work vehicle travels to circulate around an outer peripheral region of the work site, and
a reciprocating route on which the work vehicle travels to reciprocate in an inner region of the work site before the work vehicle travels to circulate on the circulating route,
the reciprocating route includes a plurality of work routes each having a length in a first direction and arranged in a second direction orthogonal to the first direction, and
in a case where one side of outlines of the work site is a reference side for defining the first direction, the reciprocating route is generated such that a start point of the reciprocating route is located on a side of the reference side in the second direction.

### <Additional Note 17>

A control method for a work vehicle that performs work while self-traveling in a work site along a target route, the control method including:
generating the target route,
the target route includes
a circulating route on which the work vehicle travels to circulate around an outer peripheral region of the work site, and
a reciprocating route on which the work vehicle travels to reciprocate in an inner region of the work site before the work vehicle travels to circulate on the circulating route, and
the control method further includes proposing a plurality of end point candidates that are candidates for an end point of the reciprocating route, and selecting one end point candidate from among the plurality of end point candidates as the end point of the reciprocating route.

### LIST OF REFERENCE SIGNS

1 Work vehicle control system
10 Work vehicle
11 Base machine
23 Operation display unit (display unit)
100 Work system
211 Generation processing unit
C1 Area information
C2 Alternative information
F1 Work site
F11 Inner region
F12 Outer peripheral region
Fo1 Exit
K11 to K18 Candidate point
R1 Target route
r10 Reciprocating route
r11 Work route
r13 Circulating route
P12 End point of reciprocating route
P21 Start point of circulating route
P22 End point of circulating route
Pc1 to Pc4 End point candidate
f11 to f14 First to fourth outlines (outlines)

## Claims

1. A control method for a work vehicle that performs work while self-traveling in a work site along a target route, the control method comprising:
generating the target route; and
designating a travel direction of the work vehicle at an end point of a circulating route when generating the circulating route on which the work vehicle travels to circulate around an outer peripheral region of the work site in the target route.

2. The control method for a work vehicle according to claim 1, wherein
the target route includes a reciprocating route on which the work vehicle travels to reciprocate in an inner region of the work site before the work vehicle travels to circulate on the circulating route, and
the reciprocating route includes a plurality of work routes each having a length in a first direction and arranged in a second direction orthogonal to the first direction.

3. The control method for a work vehicle according to claim 2, wherein
the reciprocating route is generated such that an end point of the reciprocating route is located within a predetermined distance from a start point of the circulating route.

4. The control method for a work vehicle according to claim 2 or 3, wherein
in a case where one side of outlines of the work site is a reference side for defining the first direction, the reciprocating route is generated such that a start point of the reciprocating route is located on a side of the reference side in the second direction.

5. The control method for a work vehicle according to claim 2 or 3, wherein
the reciprocating route is generated such that one of the work routes in the reciprocating route is allocated to reciprocating travel.

6. The control method for a work vehicle according to claim 2 or 3, wherein
an end point of the reciprocating route is located on the same side as an end point of the circulating route in the first direction.

7. The control method for a work vehicle according to any one of claims 1 to 3, further comprising:
designating a position of an exit of the work vehicle in the work site.

8. The control method for a work vehicle according to claim 7, wherein
the position of the exit is selectable from among a plurality of candidate points registered in advance.

9. The control method for a work vehicle according to claim 2, further comprising:
proposing a plurality of end point candidates that are candidates for an end point of the reciprocating route, and selecting one end point candidate from among the plurality of end point candidates as the end point of the reciprocating route.

10. The control method for a work vehicle according to claim 9, wherein
the one end point candidate is selected according to an operation of a user.

11. The control method for a work vehicle according to claim 9, wherein
the one end point candidate is automatically selected.

12. The control method for a work vehicle according to claim 11, wherein
the one end point candidate is selected to smoothly communicate from the reciprocating route to the circulating route on the basis of a start point of the circulating route.

13. The control method for a work vehicle according to claim 12, wherein
a condition for selecting the one end point candidate includes a condition regarding at least one of a route length, the number of turns, and a turning radius from the end point candidate to the start point of the circulating route.

14. A work vehicle control program for causing one or more processors to execute the control method for a work vehicle according to any one of claims 1 to 3.

15. A work vehicle control system that is used for a work vehicle that performs work while self-traveling in a work site along a target route, the work vehicle control system comprising:
a generation processing unit that generates the target route, wherein
the generation processing unit is configured to be able to designate a travel direction of the work vehicle at an end point of a circulating route when generating the circulating route on which the work vehicle travels to circulate around an outer peripheral region of the work site in the target route.

16. A work system comprising:
the work vehicle control system according to claim 15; and
a base machine of the work vehicle.
